# EUROPEAN PATENT APPLICATION

(11) **EP 4 644 034 A1**
(43) Date of publication of application: **05.11.2025**
(21) Application number: 23912898.6
(22) Date of filing: 26.12.2023
(51) Int. Cl.: B23K 35/30, C23C 2/12, C23C 2/40, B23K 26/21

(54) **ALUMINUM-BASED PLATING BLANK**

(30) Priority: 27.12.2022 KR 20220186367; 27.12.2022 KR 20220186391
(71) Applicant: Hyundai Steel Company, Incheon 22525 (KR)
(72) Inventor: LEE, Chang Yong, Incheon 22525 (KR); KIM, Jeong Seok, Incheon 22525 (KR); PARK, Sang Hyeon, Incheon 22525 (KR); PARK, Ji Hyoung, Incheon 22525 (KR); YOOK, Wan, Incheon 22525 (KR); LIM, Young Min, Incheon 22525 (KR); HYUN, Joo Sik, Incheon 22525 (KR)
(74) Representative: Viering, Jentschura & Partner mbB Patent- und Rechtsanwälte
(86) International application number: PCT/KR2023/021617
(87) International publication number: WO 2024/144223

(57) **Abstract**

An embodiment of the present disclosure discloses an aluminum-based plating blank including a first plated steel plate, a second plated steel plate connected to the first plated steel plate, and a joint located between the first plated steel plate and the second plated steel plate and connecting the first plated steel plate to the second plated steel plate.

## Description

### Technical Field

The present disclosure relates to an aluminum-based plating blank.

### Background Art

Vehicles use components with various strengths. For example, components which have to absorb energy in the event of a vehicle collision or rollover require relatively low strength, while components which have to maintain their shape to provide a survival space for passengers require high strength.

When the strength of a portion that has to absorb energy during a collision is too high, the impact energy is not absorbed properly and is transferred to other portions as it is, which causes an excessive impact on passengers and other components of a vehicle.

Vehicles are continuously required to be lightweight and cost-effective, and as a result, it is necessary for a single component to have different strengths in various parts of a vehicle.

Some portions of a component require high strength to protect passengers, while the other portions require relatively low strength to absorb impact energy.

A representative example of such component is a B pillar of a passenger car. The B pillar has a lower portion requiring relatively low tensile strength and has an upper portion requiring high tensile strength. The reason why a difference in strength is required is that the portion (an upper portion that has to support the roof during a rollover) that has to maintain its shape with high strength during a vehicle collision and the portion (a lower portion that has a high possibility of a side collision with another vehicle) that has to absorb the impact while being crushed are both required.

Also, because an upper portion of the B pillar has to maintain its shape to provide a stable space that may prevent injuries to passengers, the upper portion requires high strength. When the upper portion of the B pillar is not strong enough, the roof thereof will sink in the event of a vehicle rollover, and accordingly, the upper portion may pose a great threat to passengers. However, a lower portion of the B pillar has to absorb impact energy while being deformed, and accordingly, the lower portion requires relatively low strength. When the lower portion of the B pillar also has high strength, the lower portion does not absorb impact energy during a side collision, and accordingly, the impact may be transferred to other structural materials.

The specifically required strength changes depending on the type or shape of a vehicle, and the upper portion of the B pillar requires a tensile strength of about 1,350 MPa or more, while the lower portion of the B pillar requires a tensile strength greater than or equal to about 450 MPa and less than about 1,350 MPa.

In the related art, a method has been used to form a component by using a material with low strength and then attach a separate reinforcing material to a portion where high strength is required. However, when a component requires different strengths in various sections, a material (or a thick material) with high hardenability is used for an upper portion, a material (or a thin material) with low strength and low hardenability is used for a lower portion, the two materials are bonded together by using a laser to manufacture a blank, and the final product is manufactured through a hot stamping process.

A tailor welded blank (TWB) is manufactured by bonding two or more steel plate members having at least one different material and thickness from each other. An Al-Si plating layer is formed on a surface of a steel plate member for the TWB.

However, when a plated steel plate member is bonded by using a laser, the plating layer component is dissolved into a molten pool of the bonded (joined) portion, and accordingly, the joined portion has different property from a parent member. When the plating layer is based on aluminum-silicon (Al-Si) or zinc (Zn), a plating component is mixed into the bonded portion during laser bonding, which causes a decrease in mechanical properties.

Therefore, a decrease in strength of the bonded portion may be resolved or minimized by using a filler wire component, but depending on materials (for example, materials with a large amount of plating adhesion) and bonding conditions (for example, high boding speed), the mixed plating layer component (Al) may not be evenly diluted with a parent member, causing a problem such as segregation, and accordingly, an effect of the filler wire component alone may be insufficient.

The background technology related to the present disclosure is disclosed in Korean Patent No. 10-1637084 (published on July 6, 2016, title: FILLERWIRE AND METHOD OF MAKING TAYLORED WELDED BLANK USING THEREOF).

### Disclosure of Invention

### Technical Problem

According to an embodiment of the present disclosure, provided is an aluminum-based plating blank which may reduce deterioration of hardness and property of a blank joint.

According to one embodiment of the present disclosure, provided is an aluminum-based plating blank which may prevent the occurrence of defects such as segregation of a blank joint.

According to an embodiment of the present disclosure, provided is an aluminum-based plating blank which may reduce deterioration of properties of a blank joint after a hot stamping process.

According to an embodiment of the present disclosure, a method of manufacturing an aluminum-based plating blank is provided.

### Solution to Problem

An embodiment of the present disclosure provides an aluminum-based plating blank including a first plated steel plate; a second plated steel plate connected to the first plated steel plate; and a joint located between the first plated steel plate and the second plated steel plate and connecting the first plated steel plate to the second plated steel plate, wherein each of the first plated steel plate and the second plated steel plate includes a base steel and a plating layer formed with an adhesion amount of 20 to 100 g/m² on at least one surface of the base steel and including aluminum (Al), and the joint includes aluminum (Al), and an average aluminum (Al) content of the joint is 0 wt% or more and less than 0.5 wt%.

In the present embodiment, a standard deviation of aluminum (Al) content of the joint may be 0 or more and 0.45 or less.

In the present embodiment, the joint may include a first side portion adjacent to the first plated steel plate, a second side portion adjacent to the second plated steel plate, and a center portion between the first side portion and the second side portion.

In the present embodiment, a standard deviation of aluminum (Al) content of the first side portion may be 0 or more and 0.4 or less.

In the present embodiment, the base steel may include carbon (C) in an amount of 0.01 wt% or more and 0.5 wt% or less, silicon (Si) in an amount of 0.01 wt% or more and 1.0 wt% or less, manganese (Mn) in an amount of 0.3 wt% or more and 2.0 wt% or less, phosphorus (P) in an amount more than 0 and of 0.1 wt% or less, sulfur (S) in an amount more than 0 and of 0.1 wt% or less, iron (Fe), and other unavoidable impurities in a remainder amount.

In the present embodiment, the first plated steel plate may have the same strength as the second plated steel plate.

In the present embodiment, the first plated steel plate may have a different thickness from the second plated steel plate.

### Advantageous Effects of Invention

The present disclosure may reduce the deterioration of hardness and physical properties of a blank joint, prevent the occurrence of defects, such as segregation in the blank joint, and reduce joint fracture caused by a phase change of segregation into an Al-Fe compound in a hot stamping process.

### Brief Description of Drawings

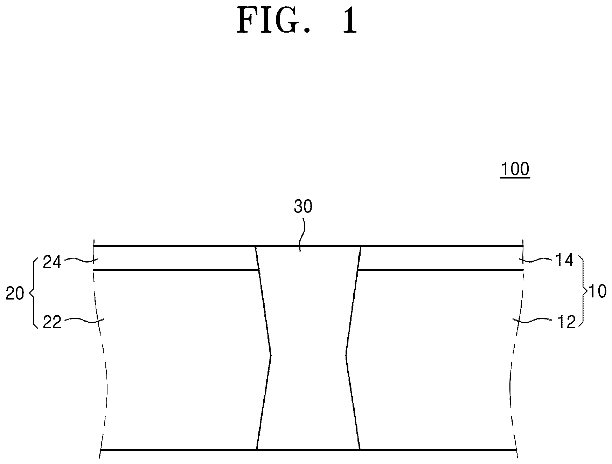

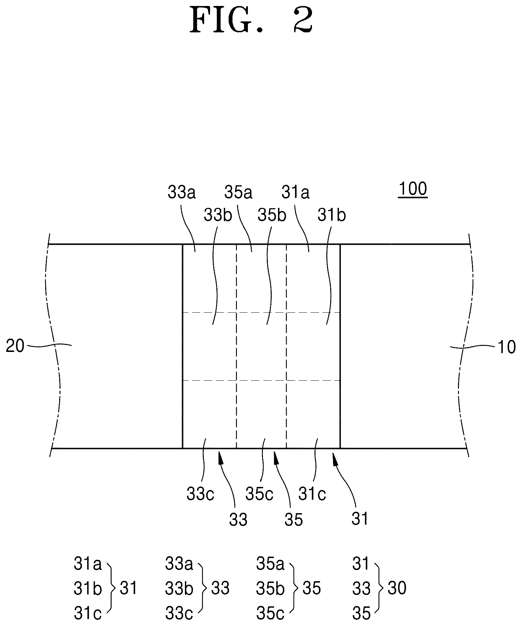

FIGS. 1 and 2 are cross-sectional views schematically illustrating an aluminum-based plating blank according to an embodiment of the present disclosure.

### Mode for the Invention

The present disclosure may be modified in various ways and has various embodiments, and some embodiments are illustrated in the drawings and described in detail in the detailed description. The effects and features of the present disclosure, and methods of achieving the effects and features will become clear with reference to the embodiments described in detail below together with the drawings. However, the present disclosure is not limited to the embodiments disclosed below, and may be implemented in various forms.

In the following embodiments, the terms first, second, and so on are not used in a limiting sense, but are used for the purpose of distinguishing one component from another component.

In the following embodiments, singular expressions include plural expressions unless the context clearly indicates otherwise.

In the following embodiments, the terms, such as include and have, mean that a feature or a component described in the specification are present, and do not preclude the possibility that one or more other features or components may be added.

In the following embodiments, when it is described that a portion, such as a layer, a region, or a component is on or over another portion, it includes not only a case where the portion is directly on another portion, but also a case where another layer, region, or component is interposed therebetween.

In the drawings, the sizes of components may be enlarged or reduced for the sake of convenience of description. For example, the sizes and thicknesses of respective components shown in the drawings are illustrated for the sake of convenience of description, and the present disclosure is not limited to the illustration.

In a case where an embodiment may be implemented differently, a certain process order may also be performed differently from the described order. For example, two processes described in succession may be performed substantially simultaneously, or may also be performed in an opposite order to the described order.

FIGS. 1 and 2 are cross-sectional views schematically illustrating an aluminum-based plating blank according to an embodiment of the present disclosure.

First, referring to FIG. 1, an aluminum-based plating blank 100 according to an embodiment of the present disclosure may include a first plated steel plate 10, a second plated steel plate 20 connected to the first plated steel plate 10, and a joint 30 located between the first plated steel plate 10 and the second plated steel plate 20 to connect the first plated steel plate 10 to the second plated steel plate 20.

In an embodiment, the first plated steel plate 10 may include a first base steel 12 and a first plating layer 14 formed on at least one surface of the first base steel 12, and the second plated steel plate 20 may include a second base steel 22 and a second plating layer 24 formed on at least one surface of the second base steel 22.

In an embodiment, the first base steel 12 may include the same composition (or, alloy composition and component) as the second base steel 22, and the first plating layer 14 may include the same composition as the second plating layer 24. Alternatively, the first base steel 12 may include a different composition from the second base steel 22, and the first plating layer 14 may include the same composition as the second plating layer 24.

Hereinafter, the first base steel 12 is described for the sake of convenience of description, and the same description may be applied to the second base steel 22.

In an embodiment, the first base steel 12 and the second base steel 22 may each include a first alloy composition. The first alloy composition may include carbon (C) in an amount of 0.01 wt% or more and 0.50 wt% or less, silicon (Si) in an amount of 0.01 wt% or more and 1.00 wt% or less, manganese (Mn) in an amount of 0.3 wt% or more and 2.0 wt% or less, phosphorus (P) in an amount more than 0 and of 0.1 wt% or less, sulfur (S) in an amount more than 0 and of 0.1 wt% or less, iron (Fe), and other unavoidable impurities in a remainder amount.

Also, the first alloy composition may further include one or more of boron (B), titanium (Ti), niobium (Nb), chromium (Cr), molybdenum (Mo), and nickel (Ni). Specifically, the first alloy composition may further include one or more of boron (B) in an amount of 0.0001 wt% or more and 0.0050 wt% or less, titanium (Ti) in an amount of 0.01 wt% or more and 0.10 wt% or less, niobium (Nb) in an amount of 0.01 wt% or more and 0.10 wt% or less, chromium (Cr) in an amount of 0.01 wt% or more and 0.50 wt% or less, molybdenum (Mo) in an amount of 0.01 wt% or more and 0.50 wt% or less, and nickel (Ni) in an amount of 0.01 wt% or more and 1.00 wt% or less. For example, because the first plated steel plate 10 includes the first base steel 12, it may be understood that the first plated steel plate 10 includes the first alloy composition.

The aluminum-based plating blank 100 may include the first alloy composition and include the first plated steel plate 10 and the second plated steel plate 20 having different thicknesses such that the aluminum-based plating blank 100 may be hot stamped to absorb impact energy in a certain portion of the blank. For example, the aluminum-based plating blank 100 may include the first plated steel plate 10 and the second plated steel plate 20 that have the same composition, the same or similar strength after hot stamping, and different thicknesses, and impact energy may be absorbed by a steel plate having a less value among values obtained by multiplying tensile strength (MPa) by a thickness (mm) among the first plated steel plate 10 and the second plated steel plate 20. However, the present disclosure is not limited thereto.

The aluminum-based plating blank 100 may include the first plated steel plate 10 and the second plated steel plate 20 that each have the first alloy composition but have different compositions and the same or different thicknesses, such that the aluminum-based plating blank 100 may absorb impact energy in a portion of the blank after hot stamping. For example, the aluminum-based plating blank 100 may include the first plated steel plate 10 and the second plated steel plate 20 that have different compositions, different strengths (for example, tensile strengths) after hot stamping, and the same thickness, or may include the first plated steel plate 10 and the second plated steel plate 20 that have different compositions, different strengths after hot stamping, and different thicknesses, and impact energy may be absorbed by a steel plate having a less value among values obtained by multiplying tensile strength (MPa) by a thickness (mm) among the first plated steel plate 10 and the second plated steel plate 20. However, the present disclosure is not limited thereto.

Carbon (C) is a major element that determines strength and hardness of steel, and may be added for the purpose of increasing tensile strength of the steel after a hot stamping (or hot pressing) process. Also, carbon may be added for the purpose of improving hardenability characteristics of steel. In an embodiment, carbon in an amount of 0.01 wt% or more and 0.50 wt% or less with respect to the total weight of the first base steel 12 may be included therein. When carbon that is less than 0.01 wt% with respect to the total weight of the first base steel 12 is included therein, it may be difficult to achieve mechanical strength of the present disclosure. In contrast to this, when carbon in an amount more than 0.50 wt% with respect to the total weight of the first base steel 12 is included therein, a problem of reduced toughness of steel or a problem of controlling brittleness of the steel may occur.

Silicon (Si) may act as a ferrite-stabilizing element in the first base steel 12. Silicon (Si) may improve ductility by purifying ferrite and may perform a function of improving carbon concentration in austenite by preventing low-temperature carbide from being formed. Furthermore, silicon (Si) may be a key element for hot-rolled, cold-rolled, and hot-stamping tissue homogenization (control of pearlite and manganese segregation zones) and for micro-dispersion of ferrite. In an embodiment, silicon in an amount of 0.01 wt% or more and 1.00 wt% or less with respect to the total weight of the first base steel 12 may be included therein. When silicon that is less than 0.01 wt% with respect to the total weight of the first base steel 12 is included therein, the functions described above may not be sufficiently performed. In contrast to this, when silicon in an amount more than 1.00 wt% with respect to the total weight of the first base steel 12 is included therein, hot-rolled and cold-rolled loads may increase, hot-rolled red scale may be excessive, and bonding properties may be reduced.

Manganese (Mn) may be added for the purpose of increasing hardenability and strength during heat treatment. In an embodiment, manganese in an amount of 0.3 wt% or more and 2.0 wt% or less with respect to the total weight of the first base steel 12 may be included therein. When manganese that is less than 0.3 wt% with respect to the total weight of the first base steel 12 is included therein, there is a high possibility that a hot-stamped material is insufficient (for example, insufficient fraction of hardness) due to insufficient hardenability. In contrast to this, when manganese in an amount more than 2.0 wt% with respect to the total weight of the first base steel 12 is included therein, ductility and toughness may be reduced due to manganese segregation or pearlite bands, which may cause a decrease in bending performance and may cause an inhomogeneous microstructure.

Phosphorus (P) may be an element that is easily segregated and may be an element that reduces toughness of steel. In an embodiment, phosphorus (P) in an amount more than 0 and 0.1 wt% or less with respect to the total weight of the first base steel 12 may be included therein. When phosphorus is included in the above-described range with respect to the total weight of the first base steel 12, the toughness of steel may be prevented from being reduced. In contrast to this, when phosphorus in an amount more than 0.1 wt% with respect to the total weight of the first base steel 12 is included therein, cracks may occur during a process, and a phosphorus iron compound may be formed to reduce the toughness of steel.

Sulfur (S) may be an element that reduces workability and physical properties. In an embodiment, sulfur in an amount more than 0 and of 0.1 wt% or less with respect to the total weight of the first base steel 12 may be included therein. When sulfur in an amount more than 0.1 wt% with respect to the total weight of the first base steel 12 is included therein, hot workability may be reduced, and surface defects, such as cracks, may occur due to the generation of large inclusions.

Boron (B) is added to increase hardenability and strength of steel by reinforcing a martensite structure, and may have a grain refinement effect by increasing austenite grain growth temperature. In an embodiment, boron in an amount of 0.0001 wt% or more and 0.0050 wt% or less with respect to the total weight of the first base steel 12 may be included therein. When boron is included in the above-described range with respect to the total weight of the first base steel 12, hard phase grain brittleness may be prevented from occurring, and toughness and bendability may be increased.

Titanium (Ti) may be added for the purpose of strengthening the hardenability and improving a material by forming a precipitate after hot stamping heat treatment. Also, titanium may effectively contribute to austenite grain refinement by forming precipitate phases, such as Ti (C,N) at high temperature. In an embodiment, titanium in an amount of 0.01 wt% or more and 0.10 wt% or less with respect to the total weight of the first base steel 12 may be included therein. When titanium is included in the above-described range with respect to the total weight of the first base steel 12, poor rolling may be prevented, coarsening of a precipitate may be prevented, the property of steel may be easily improved, and cracks on a surface of the steel may be prevented or reduced.

Niobium (Nb) may be added for the purpose of increasing strength and toughness due to a decrease in a martensite packet size. In an embodiment, niobium in an amount of 0.01 wt% or more and 0.1 wt% or less with respect to the total weight of the first base steel 12 may be included therein. When niobium is included in the above-described range with respect to the total weight of the first base steel 12, a grain refinement effect of steel is excellent in hot rolling and cold rolling processes, cracks in slab and brittle fracture of a product may be prevented during steelmaking/rolling, and formation of a coarse precipitate in the steelmaking process may be reduced.

Chromium (Cr) may be added for the purpose of improving hardenability and strength of steel. In an embodiment, chromium in an amount of 0.01 wt% or more and 0.5 wt% or less with respect to the total weight of the first base steel 12 may be included therein. When chromium is included in the above-described range with respect to the total weight of the first base steel 12, hardenability and strength of steel may be improved, and an increase in production cost and a decrease in toughness of steel may be prevented.

Molybdenum (Mo) may contribute to the improvement of strength by preventing coarsening of a precipitate during hot rolling and hot stamping and by increasing hardenability. Molybdenum (Mo) in an amount of 0.01 wt% or more and 0.5 wt% or less with respect to the total weight of the first base steel 12 may be included therein. When molybdenum is included in the above-described range with respect to the total weight of the first base steel 12, coarsening of a precipitate during hot rolling and hot stamping may be prevented and hardenability may be increased.

Nickel (Ni) may be added for the purpose of increasing hardenability and strength. Also, nickel may contribute to improving elongation by controlling austenite transformation as an austenite stabilizing element. In an embodiment, nickel in an amount of 0.01 wt% or more and 1.0 wt% or less with respect to the total weight of the first base steel 12 may be included therein. When nickel that is less than 0.01 wt% with respect to the total weight of the first base steel 12 is included therein, it may be difficult to properly implement the above-described effects. When nickel in an amount more than 1.0 wt% with respect to the total weight of the first base steel 12 is included therein, toughness may be reduced, cold workability may be reduced, and manufacturing costs of products may increase.

In an embodiment, the first base steel 12 may have the same composition as the second base steel 22. For example, the first base steel 12 and the second base steel 22 may each have a second alloy composition including carbon that is less than 0.20 wt%.

In an embodiment, the first base steel 12 and the second base steel 22 may each include the second alloy composition. The second alloy composition may include carbon (C) in an amount of 0.01 wt% or more and less than 0.20 wt%, silicon (Si) in an amount of 0.01 wt% or more and 0.8 wt% or less, manganese (Mn) in an amount of 0.8 wt% or more and 2.0 wt% or less, phosphorus (P) in an amount more than 0 and of 0.05 wt% or less, sulfur (S) in an amount more than 0 and of 0.01 wt% or less, iron (Fe), and other unavoidable impurities in a remainder amount.

Also, the second alloy composition may further include one or more of boron (B), titanium (Ti), niobium (Nb), chromium (Cr), and aluminum (Al). Specifically, the second alloy composition may further optionally include one or more of boron (B) in an amount of 0.0001 wt% or more and 0.003 wt% or less, titanium (Ti) in an amount of 0.01 wt% or more and 0.1 wt% or less, niobium (Nb) in an amount of 0.01 wt% or more and 0.1 wt% or less, chromium (Cr) in an amount of 0.01 wt% or more and 0.5 wt% or less, and aluminum (Al) in an amount of 0.001 wt% or more and 0.1 wt% or less. For example, because the first plated steel plate 10 includes the first base steel 12, it may be understood that the first plated steel plate 10 includes the second alloy composition.

In an embodiment, carbon in an amount of 0.01 wt% or more and less than 0.20 wt% with respect to the total weight of the first base steel 12 may be included therein. When carbon that is less than 0.01 wt% with respect to the total weight of the first base steel 12 is included therein, it may be difficult to achieve mechanical strength of the present disclosure. In contrast to this, when carbon in an amount of 0.20 wt% or more with respect to the total weight of the first base steel 12 is included therein, a problem of reduced toughness of steel or a problem of controlling brittleness of the steel may occur.

In an embodiment, silicon in an amount of 0.01 wt% or more and 0.8 wt% or less with respect to the total weight of the first base steel 12 may be included therein. When silicon that is less than 0.01 wt% with respect to the total weight of the first base steel 12 is included therein, the functions described above may not be sufficiently performed. In contrast to this, when silicon in an amount more than 0.8 wt% with respect to the total weight of the first base steel 12 is included therein, hot-rolled and cold-rolled loads may increase, hot-rolled red scale may be excessive, and bonding properties may be reduced.

In an embodiment, manganese in an amount of 0.8 wt% or more and 2.0 wt% or less with respect to the total weight of the first base steel 12 may be included therein. When manganese that is less than 0.8 wt% with respect to the total weight of the first base steel 12 is included therein, there is a high possibility that a hot-stamped material is insufficient (for example, insufficient fraction of hardness) due to insufficient hardenability. In contrast to this, when manganese in an amount more than 2.0 wt% with respect to the total weight of the first base steel 12 is included therein, ductility and toughness may be reduced due to manganese segregation or pearlite bands, which may cause a decrease in bending performance and may cause an inhomogeneous microstructure.

In an embodiment, phosphorus (P) in an amount more than 0 and of 0.05 wt% or less with respect to the total weight of the first base steel 12 may be included therein. When phosphorus is included in the above-described range with respect to the total weight of the first base steel 12, the toughness of steel may be prevented from being reduced. In contrast to this, when phosphorus in an amount more than 0.05 wt% with respect to the total weight of the first base steel 12 is included therein, cracks may occur during a process, and a phosphorus iron compound may be formed to reduce the toughness of steel.

In an embodiment, sulfur in an amount more than 0 and of 0.01 wt% or less with respect to the total weight of the first base steel 12 may be included therein. When sulfur in an amount more than 0.01 wt% with respect to the total weight of the first base steel 12 is included therein, hot workability may be reduced, and surface defects, such as cracks, may occur due to the generation of large inclusions.

In an embodiment, the first base steel 12 and the second base steel 22 may each include a third alloy composition including carbon in an amount of 0.20 wt% or more.

In an embodiment, the first base steel 12 and the second base steel 22 may each include the third alloy composition. The third alloy composition may include carbon (C) in an amount of 0.20 wt% or more and 0.50 wt% or less, silicon (Si) in an amount of 0.1 wt% or more and 0.8 wt% or less, manganese (Mn) in an amount of 0.3 wt% or more and 2.0 wt% or less, phosphorus (P) in an amount more than 0 and of 0.05 wt% or less, sulfur (S) in an amount more than 0 and of 0.01 wt% or less, iron (Fe), and other unavoidable impurities in a remainder amount.

Also, the first alloy composition may further include one or more of boron (B), titanium (Ti), niobium (Nb), chromium (Cr), molybdenum (Mo), and nickel (Ni). Specifically, the third alloy composition may further optionally include one or more of boron (B) in an amount of 0.001 wt% or more and 0.005 wt% or less, titanium (Ti) in an amount of 0.01 wt% or more and 0.1 wt% or less, niobium (Nb) in an amount of 0.01 wt% or more and 0.1 wt% or less, chromium (Cr) in an amount of 0.01 wt% or more and 0.5 wt% or less, molybdenum (Mo) in an amount of 0.01 wt% or more and 0.5 wt% or less, and nickel (Ni) in an amount of 0.01 wt% or more and 1.0 wt% or less.

In an embodiment, carbon in an amount of 0.20 wt% or more and 0.5 wt% or less with respect to the total weight of the first base steel 12 may be included therein. When carbon in an amount less than 0.20 wt% with respect to the total weight of the first base steel 12 is included therein, it may be difficult to achieve mechanical strength of the present disclosure. In contrast to this, when carbon in an amount more than 0.5 wt% with respect to the total weight of the first base steel 12 is included therein, a problem of reduced toughness of steel or a problem of controlling brittleness of the steel may occur.

In an embodiment, silicon in an amount of 0.1 wt% or more and 0.80 wt% or less with respect to the total weight of the first base steel 12 may be included therein. When silicon that is less than 0.1 wt% with respect to the total weight of the first base steel 12 is included therein, the functions described above may not be sufficiently performed. In contrast to this, when silicon in an amount more than 0.8 wt% with respect to the total weight of the first base steel 12 is included therein, hot-rolled and cold-rolled loads may increase, hot-rolled red scale may be excessive, and bonding properties may be reduced.

In an embodiment, manganese in an amount of 0.3 wt% or more and 2.0 wt% or less with respect to the total weight of the first base steel 12 may be included therein. When manganese that is less than 0.3 wt% with respect to the total weight of the first base steel 12 is included therein, there is a high possibility that a hot-stamped material is insufficient (for example, insufficient fraction of hardness) due to insufficient hardenability. In contrast to this, when manganese in an amount more than 2.0 wt% with respect to the total weight of the first base steel 12 is included therein, ductility and toughness may be reduced due to manganese segregation or pearlite bands, which may cause a decrease in bending performance and may cause an inhomogeneous microstructure.

In an embodiment, phosphorus in an amount more than 0 and of 0.05 wt% or less with respect to the total weight of the first base steel 12 may be included therein. When phosphorus is included in the above-described range with respect to the total weight of the first base steel 12, the toughness of steel may be prevented from being reduced. In contrast to this, when phosphorus in an amount more than 0.05 wt% with respect to the total weight of the first base steel 12 is included therein, cracks may occur during a process, and a phosphorus iron compound may be formed to reduce the toughness of steel.

In an embodiment, sulfur in an amount more than 0 and of 0.01 wt% or less with respect to the total weight of the first base steel 12 may be included therein. When sulfur in an amount more than 0.01 wt% with respect to the total weight of the first base steel 12 is included therein, hot workability may be reduced, and surface defects, such as cracks, may occur due to the generation of large inclusions.

In an embodiment, when hot stamping is performed on the first plated steel plate 10 and/or the second plated steel plate 20 including the second alloy composition, the first plated steel plate 10 and/or the second plated steel plate 20 after hot stamping may have tensile strength greater than or equal to 450 MPa, preferably greater than or equal to 450 MPa and less than 1350 MPa.

In an embodiment, when hot stamping is performed on the first plated steel plate 10 and/or the second plated steel plate 20 including the third alloy composition, the first plated steel plate 10 and/or the second plated steel plate 20 after hot stamping may have tensile strength greater than or equal to 1350 MPa, preferably greater than or equal to 1350 MPa and less than 1680 MPa. Alternatively, the first plated steel plate 10 and/or the second plated steel plate 20 after hot stamping may have tensile strength greater than or equal to 1680 MPa, preferably greater than or equal to1680 MPa and less than 2300 MPa.

In an embodiment, the first plated steel plate 10 may have a different thickness from the second plated steel plate 20. However, the present disclosure is not limited thereto.

In an embodiment, the first base steel 12 may have a different composition from the second base steel 22. In an embodiment, the first base steel 12 may have the second alloy composition including carbon in an amount less than 0.20 wt%, and the second base steel 22 may have the third alloy composition including carbon in an amount of 0.20 wt% or more. In this case, the second alloy composition and the third alloy composition may be provided with the compositions described above.

In an embodiment, when hot stamping is performed on the first plated steel plate 10 having the second alloy composition, the first plated steel plate 10 after hot stamping may have tensile strength greater than or equal to 450 MPa, preferably greater than or equal to 450 MPa and less than 1350 MPa.

In an embodiment, when hot stamping is performed on the second plated steel plate 20 having the third alloy composition, the second plated steel plate 20 after hot stamping may have tensile strength greater than or equal to 1350 MPa and less than 2300 MPa, preferably greater than or equal to 1350 MPa and less than 1680 MPa. alternatively, the second plated steel plate 20 after hot stamping may have tensile strength greater than or equal to 1680 MPa, preferably greater than or equal to 1680 MPa and less than 2300 MPa. That is, the first plated steel plate 10 may have different tensile strength from the second plated steel plate 20 after hot stamping.

In an embodiment, the first plated steel plate 10 may have the same thickness as the second plated steel plate 20. However, the present disclosure is not limited thereto.

In an embodiment, the aluminum-based plating blank 100 may include the second alloy composition including carbon in an amount less than 0.20 wt% and include the first plated steel plate 10 and the second plated steel plate 20 having different compositions and the same thickness such that the aluminum-based plating blank 100 may be hot stamped to absorb impact energy in a certain portion of the blank. For example, the aluminum-based plating blank 100 may include the first plated steel plate 10 and the second plated steel plate 20 having different compositions and different strengths (for example, tensile strengths) after hot stamping and having the same thickness, or the aluminum-based plating blank 100 may include the first plated steel plate 10 and the second plated steel plate 20 having different compositions and different strengths after hot stamping and having different thicknesses, and impact energy may be absorbed by a plated steel plate having a less value among values obtained by multiplying tensile strength (MPa) by a thickness (mm) among the first plated steel plate 10 and the second plated steel plate 20.

In an embodiment, the aluminum-based plating blank 100 may include the third alloy composition including carbon in an amount of 0.20 wt% or more and may include the first plated steel plate 10 and the second plated steel plate 20 having different compositions and the same or different thicknesses, such that the aluminum-based plating blank 100 may be hot stamped to absorb impact energy in a portion of the blank. For example, the aluminum-based plating blank 100 may include the first plated steel plate 10 and the second plated steel plate 20 having different compositions, different strengths, and the same thickness after hot stamping, or the aluminum-based plating blank 100 may include the first plated steel plate 10 and the second plated steel plate 20 having different compositions, different strengths and the same thickness after hot stamping, and impact energy may be absorbed by a plated steel plate having a less value among values obtained by multiplying tensile strength (MPa) by a thickness (mm) among the first plated steel plate 10 and the second plated steel plate 20.

In an embodiment, the first plated steel plate 10 may be manufactured by including a process of reheating a steel slab having the first alloy composition, the second alloy composition, or the third alloy composition, finish-rolling the reheated slab, coiling the hot-rolled steel plate, cold-rolling the coiled steel plate, annealing a cold rolled plate, and forming the first plating layer 14 on a surface of the annealed plate.

In an embodiment, the second plated steel plate 20 may be manufactured by including a step of reheating a steel slab having the first alloy composition, the second alloy composition, or the third alloy composition, finish-rolling the reheated slab, coiling the hot-rolled steel plate, cold-rolling the coiled steel plate, annealing a cold rolled plate, and forming the second plating layer 24 on a surface of the annealed plate.

In an embodiment, the first plating layer 14 may have the same component as the second plating layer 24. Hereinafter, the first plating layer 14 is described for the sake of convenience of description, and the same description may be applied to the second plating layer 24.

In an embodiment, the first plating layer 14 may be formed by including a step of immersing the first base steel 12 in a plating bath containing at least one of molten aluminum and an aluminum alloy at 600 to 800 °C and then cooling the first base steel 12 at an average cooling rate of 1 to 50 °C/s.

The first plating layer 14 may be formed on at least one surface of the first base steel 12. The first plating layer 14 may include a diffusion layer and a surface layer sequentially stacked on the first base steel 12. The surface layer is a layer including aluminum (Al) in an amount of 80 wt% or more and may prevent oxidation and so on of the first base steel 12. The diffusion layer is formed by mutual diffusion of iron (Fe) of the first base steel 12 and aluminum (Al) of the first plating layer 14, and may include an aluminum-iron (Al-Fe) compound and an aluminum-iron-silicon (Al-Fe-Si) compound. The diffusion layer may include iron (Fe) in an amount 20 wt% to 60 wt%, aluminum (Al) in an amount 30 wt% to 80 wt%, and silicon (Si) in an amount 0.1 wt% to 40 wt%.

In an embodiment, the diffusion layer may have a higher melting point than the surface layer. By providing the diffusion layer having a higher melting point than the surface layer between the first base steel 12 and the surface layer, a liquid metal embrittlement phenomenon, in which the surface layer melts during a hot press process and aluminum (Al) of the surface layer penetrates into a structure of the first base steel 12, may be prevented or reduced.

In an embodiment, after the first base steel 12 is immersed in a plating bath, a molten plating layer may be wiped by spraying at least one of air and gas onto a surface of the first base steel 12 to adjust the spray pressure, and accordingly, a plating adhesion amount of the first plating layer 14 may be adjusted.

In an embodiment, the plating adhesion amount may be formed at 20 to 150 g/m² on at least one surface of the first base steel 12. Preferably, the plating adhesion amount may be formed at 20 to 100 g/m² on at least one surface of the first base steel 12. When the plating adhesion amount is less than 20 g/m², the corrosion resistance of a portion where the first plating layer 14 is in contact with the joint 30 may be reduced. In contrast to this, when the plating adhesion amount exceeds 100 g/m², the amount of aluminum (Al) being mixed into the joint 30 when the first plated steel plate 10 is bonded to the second plated steel plate 20, particularly the amount of aluminum (Al) being mixed into the joint 30 from a plating layer adjacent to the joint 30 increases, and accordingly, segregation of aluminum (Al) may occur.

In an embodiment, an area fraction (cross-sectional area of the surface layer / cross-sectional area of the first plating layer) of the surface layer, which is a ratio of the cross-sectional area of the surface layer to the cross-sectional area of the plating layer, may be less than or equal to 97 %. Preferably, the area fraction of the surface layer (cross-sectional area of the surface layer / cross-sectional area of the first plating layer), which is the ratio of the cross-sectional area of the surface layer to the cross-sectional area of the plating layer, may be 65 % or more and 97% or less.

In an embodiment, the surface layer may include aluminum (Al) in an amount 80 wt% to 100 wt%, and an average thickness of the surface layer may be 10 *µ*m to 40 *µ*m. The surface layer may have a high aluminum (Al) content, and when the area fraction of the surface layer exceeds 97 wt% or an average thickness of the surface layer exceeds 40 *µ*m, the amount of aluminum (Al) being mixed into the joint 30 increases, and accordingly, segregation of aluminum (Al) may occur. Also, because a thickness of the diffusion layer is thinned, aluminum (Al) of the surface layer may melt during hot stamping, and the molten aluminum (Al) may penetrate into a structure of the first base steel 12 or penetrate into a boundary surface between the joint 30 and the first base steel 12 through the structure of the first base steel 12. Also, when the area fraction of the surface layer is less than 65 % or the average thickness of the surface layer is less than 10 *µ*m, a thickness of the diffusion layer may be thickened, and accordingly, productivity of a hot stamping component may decrease.

In an embodiment, the joint 30 may be formed by aligning a side surface of the first plated steel plate 10 with a side surface of the second plated steel plate 20 to face each other, and then emitting a laser to a boundary between the first plated steel plate 10 and the second plated steel plate 20 to melt the first plated steel plate 10 and the second plated steel plate 20. The joint 30 may include aluminum (Al) in an amount of 0 wt% or more and less than 0.5 wt%, and components mixed in the remainder of the first plated steel plate 10 and the second plated steel plate 20.

In an embodiment, the joint 30 may be formed by aligning the side surface of the first plated steel plate 10 with the side surface of the second plated steel plate 20 to face each other, supplying a filler wire to a boundary between the first plated steel plate 10 and the second plated steel plate 20, and emitting a laser to melt the first plated steel plate 10, the second plated steel plate 20, and the filler wire. The joint 30 may include aluminum (Al) in an amount of 0 wt% or more and less than 0.5 wt%, and components mixed in the remainder of the first plated steel plate 10, the second plated steel plate 20, and the filler wire.

In an embodiment, the joint 30 may include carbon (C) in an amount of 0.01 wt% or more and less than 1.5 wt%, silicon (Si) in an amount of 0.05 wt% or more and less than 1.0 wt%, manganese (Mn) in an amount of 1.0 wt% or more and less than 3.0 wt%, phosphorus (P) in an amount more than 0 and less than 0.3 wt%, sulfur (S) in an amount more than 0 and less than 0.3 wt%, titanium (Ti) in an amount of 0.01 wt% or more and less than 0.5 wt%, boron (B) in an amount of 0.0005 wt% or more and less than 0.01 wt%, aluminum (Al) in an amount of 0 or more and less than 0.5 wt%, iron (Fe), and other unavoidable impurities in a remainder amount. Also, the joint 30 may further include at least one component from among niobium (Nb) in an amount of 0.01 wt% or more and less than 1.5 wt% and chromium (Cr) in an amount of 0.05 wt% or more and less than 2.0 wt%.

In an embodiment, when a carbon content of at least one of the first plated steel plate 10 and the second plated steel plate 20 is 0.2 wt% or more, the joint 30 may be formed of a component system in which ferrite is not formed at a temperature higher than Ac3 temperature of at least one of the first plated steel plate 10 and the second plated steel plate 20. Preferably, the joint 30 may be formed of a component system in which ferrite is not formed at a temperature higher than 840 °C. Specifically, the joint 30 after the hot stamping process, that is, the joint 30 after the hot stamping process in which the aluminum-based plating blank 100 is heated to 850 to 1000 °C, press-formed, and then rapidly cooled at an average cooling rate of 10 to 500 °C/s, may be formed of a component system that may have a microstructure including 90 % or more of martensite in area fraction. For example, at the hot stamping heating temperature, the joint 30 is present as a full austenite structure, and then may be transformed into a martensite structure with an area fraction of 90% or more during cooling, preferably a full martensite structure.

In an embodiment, the joint 30 may include aluminum (Al) in an amount of 0 wt% or more and less than 0.5 wt%. The aluminum content included in the joint 30 may be the sum of aluminums introduced from the molten first plated steel plate 10 and the molten second plated steel plate 20. Alternatively, the content of aluminum included in the joint 30 may be the sum of aluminum introduced from the molten first plated steel plate 10, the second plated steel plate 20, and the filler wire.

The joint 30 may include carbon (C) in an amount of 0.01 wt% or more and less than 1.5 wt%. When the carbon content of the joint 30 is less than 0.01 wt%, the joint 30 may be softened, and hardness of the joint 30 may be less than hardnesses of the first plated steel plate 10 and the second plated steel plate 20, and accordingly, fracture may occur in the joint 30. In contrast to this, when the carbon content is 1.5 wt% or more, the hardness of the joint 30 may increase excessively, and accordingly, brittle fracture may occur in the joint 30 due to an external impact and so on.

The joint 30 may include silicon (Si) in an amount of 0.05 wt% or more and less than 1.0 wt%. When the silicon content included in the joint 30 is less than 0.05 wt%, brittle fracture may occur in the joint 30. In contrast to this, when the silicon content included in the joint 30 is 1.0 wt% or more, slag may occur on a bead surface.

The joint 30 may include manganese (Mn) in an amount of 1.0 wt% or more and less than 3.0 wt%. When manganese (Mn) content of the joint 30 is less than 1.0 wt%, the joint 30 may be softened during hot stamping, and hardness of the joint 30 may be less than hardness of the first plated steel plate 10 and/or hardness of the second plated steel plate 20, which causes fracture in the joint 30. In contrast to this, when the manganese content is 3.0 wt% or more, hardness of the joint 30 increases excessively, and brittle fracture may occur in the joint 30 due to an external impact and so on, and a shape quality of the joint 30 may be reduced and cracks may occur in the joint 30 due to a decrease in viscosity when the joint 30 is melted and an increase in expansion coefficient when transformed into a solid phase.

The joint 30 may include phosphorus (P) in an amount more than 0 and less than 0.3 wt%. When the phosphorus content of the joint 30 is 0.3 wt% or more, brittle fracture due to segregation may occur in the joint 30.

The joint 30 may include sulfur (S) in an amount more than 0 and less than 0.3 wt%. When sulfur (S) content of the joint 30 is 0.3 wt% or more, cracks may occur in the joint 30 due to formation of inclusions.

The joint 30 may include titanium (Ti) in an amount of 0.01 wt% or more and less than 0.5 wt%. When the titanium content of the joint 30 is less than 0.01 wt%, the joint 30 may be softened during hot stamping, and hardness of the joint 30 may be less than hardness of the first plated steel plate 10 and/or hardness of the second plated steel plate 20, and accordingly, fracture may occur in the joint 30. In contrast to this, when the titanium content of the joint 30 is 0.5 wt% or more, brittle fracture may occur in the joint 30.

The joint 30 may include boron (B) in an amount of 0.0005 wt% or more and less than 0.01 wt%. When the boron content of the joint 30 is less than 0.0005 wt%, the joint 30 may be softened during hot stamping, and hardness of the joint 30 may be less than hardness of the first plated steel plate 10 and/or hardness of the second plated steel plate 20, and thus fracture may occur in the joint 30. In contrast to this, when the boron content of the joint 30 is 0.01 wt% or more, brittle fracture may occur in the joint 30.

Referring to FIG. 2, in an embodiment, the joint 30 may include a first side portion 31, a second side portion 33, and a center portion 35. The first side portion 31 may be a portion of the joint 30 adjacent to the first plated steel plate 10, the second side portion 33 may be a portion of the joint 30 adjacent to the second plated steel plate 20, and the center portion 35 may be a portion between the first side portion 31 and the second side portion 33. That is, the center portion 35 of the joint 30 may be the center (or intermediate) portion of the joint 30.

In an embodiment, the first side portion 31, the second side portion 33, and the center portion 35 of the joint 30 may have the same width as each other. For example, a width of the first side portion 31 may be 1/3 of the total width of the joint 30, a width of the second side portion 33 may be 1/3 of the total width of the joint 30, and a width of the center portion 35 may be 1/3 of the total width of the joint 30. However, the present disclosure is not limited thereto. In this case, the total width of the joint 30 may mean a width between a boundary between the joint 30 and the first plated steel plate 10 and a boundary between the joint 30 and the second plated steel plate 20.

In an embodiment, the first side portion 31 may include a first portion 31a, a second portion 31b, and a third portion 31c. The first portion 31a, the second portion 31b, and the third portion 31c of the first side portion 31 may be sequentially arranged in a direction intersecting a width direction of the joint 30.

In an embodiment, the second side portion 33 may include a fourth portion 33a, a fifth portion 33b, and a sixth portion 33c. The fourth portion 33a, the fifth portion 33b, and the sixth portion 33c of the second side portion 33 may be sequentially arranged in a direction intersecting the width direction of the joint 30.

In an embodiment, the center portion 35 may include a seventh portion 35a, an eighth portion 35b, and a ninth portion 35c. The seventh portion 35a, the eighth portion 35b, and the ninth portion 35c of the center portion 35 may be sequentially arranged in a direction intersecting the width direction of the joint 30.

In an embodiment, an average content of aluminum (Al) of the joint 30 including the first side portion 31, the second side portion 33, and the center portion 35 may be 0 wt% or more and less than 0.5 wt%. Specifically, an average value of aluminum (Al) contents measured in the first portion 31a to the ninth portion 35c of the joint portion (30) may be 0 wt% or more and less than 0.5 wt%.

In an embodiment, a standard deviation of aluminum (Al) content of the joint 30 including the first side portion 31, the second side portion 33, and the center portion 35 may be 0.45 or less, for example, 0 or more and 0.45 or less. Specifically, the standard deviation of the aluminum (Al) contents measured in the first portion 31a to the ninth portion 35c of the joint 30 may be 0 or more and 0.45 or less.

In an embodiment, the standard deviation of the aluminum (Al) content of the first side portion 31 may be 0 or more and 0.4 or less. Specifically, the standard deviation of the aluminum (Al) contents measured in the first portion 31a, the second portion 31b, and the third portion 31c of the first side portion 31 may be 0 or more and 0.4 or less. When the standard deviation of the aluminum (Al) content of the first side portion 31 is greater than 0.4, it may mean that aluminum (Al) is unevenly distributed in the first side portion 31. That is, when the standard deviation of the aluminum (Al) content of the first side portion 31 is greater than 0.4, aluminum (Al) is unevenly distributed in the first side portion 31, and accordingly, local aluminum (Al) segregation may occur in the first side portion 31 of the joint 30 after hot stamping. Therefore, when the standard deviation of the aluminum (Al) content of the first side portion 31 is 0 or more and 0.4 or less, aluminum (Al) is evenly distributed in the first side portion 31, and accordingly, local aluminum (Al) segregation may be prevented from occurring in the first side portion 31 of the joint 30 after hot stamping, a microstructure of the first side portion 31 may be made uniform after hot stamping, and at the same time, fracture may be prevented from occurring in the joint 30.

In an embodiment, the standard deviation of the aluminum (Al) content of the second side portion 33 may be 0 or more and 0.4 or less. Specifically, the standard deviation of the aluminum (Al) contents measured in the fourth portion 33a, the fifth portion 33b, and the sixth portion 33c of the second side portion 33 may be 0 or more and 0.4 or less. When the standard deviation of the aluminum (Al) content of the second side portion 33 is greater than 0.4, it may mean that aluminum (Al) is unevenly distributed in the second side portion 33. That is, when the standard deviation of the aluminum (Al) content of the second side portion 33 is greater than 0.4, aluminum (Al) is unevenly distributed in the second side portion 33, and accordingly, local aluminum (Al) segregation may occur in the second side portion 33 of the joint 30 after hot stamping. Therefore, when the standard deviation of the aluminum (Al) content of the second side portion 33 is 0 or more and 0.4 or less, aluminum (Al) is evenly distributed in the second side portion 33, and accordingly, local aluminum (Al) segregation may be prevented from occurring in the second side portion 33 of the joint 30 after hot stamping, a microstructure of the second side portion 33 may be made uniform after hot stamping, and at the same time, fracture may be prevented from occurring in the joint 30.

When aluminum (Al) segregation occurs in a portion (for example, the first side portion 31) where the first plated steel plate 10 is adjacent to the joint 30 and a portion (for example, the second side portion 33) where the second plated steel plate 20 is adjacent to the joint 30, there is a high possibility that fracture occurs between the first plated steel plate 10 and the joint 30 and between the second plated steel plate 20 and the joint 30.

In an embodiment, because a standard deviation of the aluminum (Al) content of the portion (for example, the first side portion 31) where the first plated steel plate 10 is adjacent to the joint 30 and the portion (for example, the second side portion 33) where the second plated steel plate 20 is adjacent to the joint 30 is 0 or more and 0.4 or less, aluminum (Al) is evenly distributed in the first side portion 31 and the second side portion 33, and accordingly, it is possible to prevent or reduce the occurrence of fracture between the first plated steel plate 10 and the joint 30 and between the second plated steel plate 20 and the joint 30.

In an embodiment, a standard deviation of aluminum (Al) content of a side portion adjacent to a plated steel plate having a larger value obtained by multiplying tensile strength (MPa) by a thickness (mm) after hot stamping among the first side portion 31 and the second side portion 33 may be less than or equal to a standard deviation of aluminum (Al) content of a side portion adjacent to a plated steel plate having a less value obtained by multiplying tensile strength (MPa) by a thickness (mm) after hot stamping. Aluminum (Al) of a side portion adjacent to a steel plate having a larger value obtained by multiplying tensile strength (MPa) by a thickness (mm) and with relatively low impact energy absorption performance after hot stamping may be more uniformly distributed to prevent fracture from occurring in the joint 30.

In an embodiment, when the first plated steel plate 10 has different tensile strength from the second plated steel plate 20 after hot stamping, an average silicon (Si) content of the joint 30 including the first side portion 31, the second side portion 33, and the center portion 35 may be 0.3 wt% or more and 0.8 wt% or less. Specifically, an average value of the silicon (Si) contents measured in the first portion 31a to the ninth portion 35c of the joint 30 may be 0.3 wt% or more and 0.8 wt% or less.

In an embodiment, a standard deviation of the silicon (Si) content of the joint 30 including the first side portion 31, the second side portion 33, and the center portion 35 may be 0 or more and 0.2 or less. Specifically, the standard deviation of silicon (Si) contents measured in the first portion 31a to the ninth portion 35c of the joint 30 may be 0 or more and 0.2 or less.

Silicon (Si) is a ferrite stabilizing element and may promote ferrite transformation. When an average silicon (Si) content of the joint 30 is less than 0.3 wt%, brittle fracture may occur in the joint 30. In contrast to this, when the average silicon (Si) content of the joint 30 is more than 0.8 wt%, a large amount of ferrite may be generated to cause fracture in the joint 30 when tensioned.

Also, when the standard deviation of the silicon (Si) content of the joint 30 is greater than 0.2, silicon (Si) may be partially concentrated in the joint 30 to cause a soft phase of ferrite and so on to be accumulated, and accordingly, fracture may occur in the joint 30 when tensioned.

In an embodiment, even when an average content and a standard deviation of aluminum (Al) in the joint 30 satisfy the conditions described above, when a large amount of ferrite is generated due to excessive silicon (Si) content of the joint 30 or when a soft phase of ferrite or so on is accumulated due to partial concentration of silicon (Si), fracture may occur in the joint 30 when tensioned. Specifically, even when an average content of aluminum (Al) of the joint 30 satisfies an amount of 0 wt% or more and less than 0.5 wt%, a standard deviation of the aluminum (Al) content of the joint 30 satisfies a value 0 or more and 0.45 or less, and a standard deviation of aluminum (Al) contents of the first side portion 31 and the second side portion 33 satisfies a value greater than or equal to 0 and less than or equal to 0.4, when an average content of silicon (Si) of the joint 30 is more than 0.8 wt% or a standard deviation of the silicon (Si) content of the joint 30 is greater than 0.2, a large amount of ferrite is generated due to excessive silicon (Si) content of the joint 30 or a soft phase of ferrite or so on is accumulated due to partial concentration of silicon (Si), and accordingly, fracture may occur in the joint 30 when tensioned. Therefore, when an average content of silicon (Si) of the joint 30 is 0.3 or more wt% and 0.8 wt% or less and a standard deviation of the silicon (Si) content of the joint 30 is 0 or more and 0.2 or less, formation of a large amount of ferrite in the joint 30 may be prevented, and a soft phase of ferrite or so on may be accumulated due to partial concentration of silicon (Si) in the joint 30, and accordingly, fracture may occur in the joint 30 when tensioned.

In an embodiment, an average hardness of the joint 30 may be greater than or equal to an average hardness of the first plated steel plate 10 and an average hardness of the second plated steel plate 20. In other words, the average hardness of the joint 30 may be greater than or equal to an average hardness of the first base steel 12 and an average hardness of the second base steel 22.

Specifically, when the aluminum-based plating blank 100 is heated to Ac3 or higher, press-formed, and cooled to 300 °C or less at a cooling rate of 10 to 500 °C/s to perform hot stamping, the average hardness of the joint 30 may be greater than an average hardness of the first plated steel plate 10 and an average hardness of the second plated steel plate 20. When the aluminum-based plating blank 100 is combined with steel plates of the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), an average hardness of the joint 30 after hot stamping may be greater than or equal to average hardnesses of the first plated steel plate 10 and the second plated steel plate 20 after hot stamping.

In other words, when the aluminum-based plating blank 100 is heated to Ac3 or higher, press-formed, cooled to 300 °C or less at a cooling rate of 10 to 500 °C/s, and hot stamped, an average hardness of the joint 30 may be higher than an average hardness of the first base steel 12 and an average hardness of the second base steel 22. When the aluminum-based plating blank 100 is combined with steel plates having the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), an average hardness of the joint 30 after hot stamping may be greater than or equal to average hardnesses of the first base steel 12 and the second base steel 22 after hot stamping.

In an embodiment, the least hardness of the joint 30 after hot stamping may be greater than or equal to the least hardness of the first plated steel plate 10 and the least hardness of the second plated steel plate 20 after hot stamping. Specifically, when the aluminum-based plating blank 100 is combined with steel plates having the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), the least hardness of the joint 30 after hot stamping may be greater than or equal to the least hardness of the first plated steel plate 10 and the least hardness of the second plated steel plate 20 after hot stamping.

In other words, the least hardness of the joint 30 after hot stamping may be greater than or equal to the least hardness of the first base steel 12 and the least hardness of the second base steel 22 after hot stamping. Specifically, when the aluminum-based plating blank 100 is combined with steel plates having the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), the least hardness of the joint 30 after hot stamping may be greater than or equal to the least hardness of the first base steel 12 and the least hardness of the second base steel 22 after hot stamping.

Because the least hardness of the joint 30 after hot stamping is greater than or equal to the least hardness of the first plated steel plate 10 and the least hardness of the second plated steel plate 20 after hot stamping, the occurrence of fracture in the joint 30 may be prevented or reduced.

In other words, because the least hardness of the joint 30 after hot stamping is greater than or equal to the least hardness of the first base steel 12 and the least hardness of the second base steel 22 after hot stamping, the occurrence of fracture in the joint 30 may be prevented or reduced.

In an embodiment, the value obtained by multiplying a thickness of the joint 30 by tensile strength of the joint 30 after hot stamping may be greater than or equal to the value obtained by multiplying a thickness of the first plated steel plate 10 by tensile strength of the first plated steel plate 10 after hot stamping and the value obtained by multiplying a thickness of the second plated steel plate 20 by tensile strength of the second plated steel plate 20 after hot stamping.

Specifically, when the aluminum-based plating blank 100 is combined with steel plates having the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), the value obtained by multiplying the greatest thickness of the joint 30 by tensile strength of the joint 30 after hot stamping may be greater than the value obtained by multiplying a thickness of the plated steel plate having a thinner thickness among the first plated steel plate 10 and the second plated steel plate 20 by tensile strength of the plated steel plate after hot stamping.

In other words, when the aluminum-based plating blank 100 is combined with steel plates having the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), the value obtained by multiplying the greatest thickness of the joint 30 by tensile strength of the joint 30 after hot stamping may be greater than the value obtained by multiplying a thickness of a base steel having a thinner thickness among the first base steel 12 and the second base steel 22 by tensile strength of the base steel after hot stamping.

In an embodiment, when the aluminum-based plating blank 100 is combined with steel plates having the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), the joint 30 may be formed of a component system in which ferrite is not formed at a temperature higher than Ac3 of the first plated steel plate 10 and the second plated steel plate 20. Preferably, the joint 30 may be formed of a component system in which ferrite is not formed at a temperature higher than 840 °C. Specifically, the joint 30 after the hot stamping process, that is, the joint 30 after the hot stamping process in which the aluminum-based plating blank 100 is heated to 850 to 1000 °C, press-formed, and then rapidly cooled at an average cooling rate of 10 to 500 °C/s, may be formed of a component system that may have a microstructure including 90 % or more of martensite in area fraction and other inevitable structures in the remainder. For example, at the hot stamping heating temperature, the joint 30 is present as a full austenite structure, and then may be transformed into a martensite structure with an area fraction of 90% or more during cooling, preferably a full martensite structure.

In an embodiment, an average hardness of the first plated steel plate 10 may be different from an average hardness of the second plated steel plate 20. Also, an average hardness of the joint 30 may be greater than at least one of the average hardness of the first plated steel plate 10 and the average hardness of the second plated steel plate 20. In other words, the average hardness of the joint 30 may be greater than at least one of the average hardness of the first base steel 12 and the average hardness of the second base steel 22.

Specifically, when the aluminum-based plating blank 100 is heated to 850 °C or more, press-formed, cooled to 300 °C or less at a cooling rate of 10 to 500 °C/s, and hot-stamped, the average hardness of the joint 30 may be greater than at least one of the average hardness of the first plated steel plate 10 and the average hardness of the second plated steel plate 20. In other words, the average hardness of the joint 30 may be greater than at least one of the average hardness of the first base steel 12 and the average hardness of the second base steel 22.

When the aluminum-based plating blank 100 is combined with steel plates having different compositions (for example, when the first plated steel plate 10 has a different composition from the second plated steel plate 20 by including a case where the first plated steel plate 10 and the second plated steel plate 20 respectively have a second alloy composition and a third alloy composition, each of the first plated steel plate 10 and the second plated steel plate 20 has a first alloy composition, each of the first plated steel plate 10 and the second plated steel plate 20 has a second alloy composition, or each of the first plated steel plate 10 and the second plated steel plate 20 has a third alloy composition), the average hardness of the joint 30 after hot stamping may be greater than the least hardness of a plated steel plate with lower tensile strength among the first plated steel plate 10 and the second plated steel plate 20 after hot stamping. In this case, even when both the first plated steel plate 10 and the second plated steel plate 20 have the first alloy composition, the first plated steel plate 10 may have a different composition from the second plated steel plate 20, and accordingly, the first plated steel plate 10 has different tensile strength from the second plated steel plate 20. Even when both the first plated steel plate 10 and the second plated steel plate 20 have the second alloy composition, the first plated steel plate 10 may have a different composition from the second plated steel plate 20, and accordingly, the first plated steel plate 10 has different tensile strength from the second plated steel plate 20. Even when both the first plated steel plate 10 and the second plated steel plate 20 have the third alloy composition, the first plated steel plate 10 may have a different composition from the second plated steel plate 20, and accordingly, the first plated steel plate 10 has different tensile strength from the second plated steel plate 20.

In other words, when the aluminum-based plating blank 100 is combined with steel plates having different compositions, the average hardness of the joint 30 after hot stamping may be greater than the least hardness of a base steel having less tensile strength.

In an embodiment, the least hardness of the joint 30 after hot stamping may be greater than the least hardness of the first plated steel plate 10 and the least hardness of the second plated steel plate 20 after hot stamping. In other words, the least hardness of the joint 30 after hot stamping may be greater than the least hardness of the first base steel 12 and the least hardness of the second base steel 22 after hot stamping.

When the aluminum-based plating blank 100 is combined with steel plates having different compositions, the least hardness of the joint 30 after hot stamping may be greater than the least hardness of a plated steel plate with lower tensile strength among the first plated steel plate 10 and the second plated steel plate 20 after hot stamping.

In other words, when the aluminum-based plating blank 100 is combined with steel plates having different compositions, the least hardness of the joint 30 after hot stamping may be greater than the least hardness of a base steel with lower tensile strength among the first base steel 12 and the second base steel 22 after hot stamping.

Because the least hardness of the joint 30 after hot stamping is greater than the least hardness of the first plated steel plate 10 and the least hardness of the second plated steel plate 20 after hot stamping, the occurrence of fracture in the joint 30 may be prevented or reduced.

In other words, because the least hardness of the joint 30 after hot stamping is greater than the least hardness of the first base steel 12 and the least hardness of the second base steel 22 after hot stamping, the occurrence of fracture in the joint 30 may be prevented or reduced.

In an embodiment, the value obtained by multiplying a thickness of the joint 30 by tensile strength of the joint 30 after stamping may be greater than at least one of the value obtained by multiplying a thickness of the first plated steel plate 10 by tensile strength of the first plated steel plate 10 after hot stamping and the value obtained by multiplying a thickness of the second plated steel plate 20 by tensile strength of the second plated steel plate 20 after hot stamping.

Specifically, When the aluminum-based plating blank 100 is combined with steel plates having different compositions (for example, when the first plated steel plate 10 has a different composition from the second plated steel plate 20 by including a case where the first plated steel plate 10 and the second plated steel plate 20 respectively have a second alloy composition and a third alloy composition, or each of the first plated steel plate 10 and the second plated steel plate 20 has a first alloy composition), the value obtained by multiplying the greatest thickness of the joint 30 by tensile strength of the joint 30 after hot stamping may be greater than at least one of the value obtained by multiplying a thickness of the first plated steel plate 10 by tensile strength of the first plated steel plate 10 after hot stamping and the value obtained by multiplying a thickness of the second plated steel plate 20 by tensile strength of the second plated steel plate 20 after hot stamping.

Hereinafter, a method of manufacturing the aluminum-based plating blank 100 is described.

A method of manufacturing the aluminum-based plating blank 100 according to an embodiment may include a step of arranging edges of the first plated steel plate 10 and the second plated steel plate 20 to face each other, and a step of forming the joint 30 connecting the first plated steel plate 10 to the second plated steel plate 20 by emitting a laser beam.

In an embodiment, a side surface of the first plated steel plate 10 may be arranged to face a side surface of the second plated steel plate 20. In this case, the side surface of the first plated steel plate 10 may be in contact with the side surface of the second plated steel plate 20.

In an embodiment, before the step of arranging the side surface of the first plated steel plate 10 and the side surface of the second plated steel plate 20 to face each other, a step of removing at least part of the first plating layer 14 of the first plated steel plate 10 and at least part of the second plating layer 24 of the second plated steel plate 20 may be performed first. That is, before laser welding is performed on the first plated steel plate 10 and the second plated steel plate 20, plating layers of portions to be welded in the first plated steel plate 10 and the second plated steel plate 20 may be removed in advance. However, the present disclosure is not limited thereto. The step of removing at least part of the first plating layer 14 of the first plated steel plate 10 and at least part of the second plating layer 24 of the second plated steel plate 20 may be omitted.

In an embodiment, at least part of the first plating layer 14 of the first plated steel plate 10 may be removed. Specifically, at least part of the first plating layer 14 of the portion to be welded in the first plated steel plate 10 may be removed.

In this case, the first plating layer 14 may be removed by using a method including melting and evaporation. Specifically, the first plating layer 14 may be removed by a laser beam. For example, the removal of the first plating layer 14 may be performed by a laser beam. When a laser beam having high-power and high-energy density is emitted on a surface of the first plating layer 14 to remove the first plating layer 14, the surface of the first plating layer 14 may be liquefied and evaporated. Also, the first plating layer 14 liquefied by plasma pressure may be discharged to the surroundings. By controlling the laser beam, only a part of the first plating layer 14 in the thickness direction or the entire first plating layer 14 may be removed.

As described above, the first plating layer 14 may include a diffusion layer and a surface layer. In an embodiment, when at least part of the first plating layer 14 of the first plated steel plate 10 is removed, both the diffusion layer and the surface layer of the first plating layer 14 may be removed.

Also, the first plating layer 14 may be arranged on both one surface and the other surface of the first base steel 12 in a thickness direction of the first plated steel plate 10. In an embodiment, only at least part of the first plating layer 14 arranged on one surface of the first base steel 12 may be removed, and the first plating layer 14 arranged on the other surface of the first base steel 12 may not be removed.

In an embodiment, at least part of the second plating layer 24 of the second plated steel plate 20 may be removed. Specifically, at least part of the second plating layer 24 of a portion to be welded in the second plated steel plate 20 may be removed. In this case, the second plating layer 24 may be removed by using a method including melting and evaporation.

As described above, the second plating layer 24 may include a diffusion layer and a surface layer. In an embodiment, when at least part of the second plating layer 24 of the second plated steel plate 20 is removed, both the diffusion layer and the surface layer of the second plating layer 24 may be removed.

Also, the second plating layer 24 may be arranged on both one surface and the other surface of the second base steel 22 in a thickness direction of the second plated steel plate 20. In an embodiment, only at least part of the second plating layer 24 arranged on one surface of the second base steel 22 may be removed, and the second plating layer 24 arranged on the other surface of the second base steel 22 may not be removed.

In an embodiment, at least part of the first plating layer 14 of the first plated steel plate 10 and at least part of the second plating layer 24 of the second plated steel plate 20 may be removed simultaneously. In this case, at least part of the first plating layer 14 of the first plated steel plate 10 and at least part of the second plating layer 24 of the second plated steel plate 20 may be removed by a laser beam. Specifically, after the first plated steel plate 10 and the second plated steel plate 20 are arranged to be separated from each other by a preset distance, a laser beam may be emitted to simultaneously remove at least part of the first plating layer 14 of the first plated steel plate 10 and at least part of the second plating layer 24 of the second plated steel plate 20. For example, after edges of the first plated steel plate 10 and the second plated steel plate (20) are arranged to be separated by a preset distance, a laser may be used to remove at least part of the first plating layer 14 and at least part of the second plating layer 24.

In an embodiment, at least part of the first plating layer 14 arranged on one surface of the first base steel 12 and at least part of the first plating layer 14 arranged on the other surface of the first base steel 12 may be removed. Specifically, both the diffusion layer and the surface layer of the first plating layer 14 of portions to be welded in the first plating layers 14 arranged on one surface and the other surface of the first base steel 12 may be removed.

In an embodiment, at least part of the second plating layer 24 arranged on one surface of the second base steel 22 and at least part of the second plating layer 24 arranged on the other surface of the second base steel 22 may be removed. Specifically, both the diffusion layer and the surface layer of the second plating layer 24 of portions to be welded among the second plating layers 24 respectively arranged on one surface and the other surface of the second base steel 22 may be removed.

In an embodiment, when at least part of the first plating layer 14 of the first plated steel plate 10 is removed, only at least part of the first plating layer 14 in a thickness direction of the first plated steel plate 10 may be removed. For example, among the surface layer and the diffusion layer of the first plating layer 14 of a portion to be welded in the first plated steel plate 10, only the surface layer may be removed. In this case, among the surface layer and the diffusion layer of the first plating layer 14 arranged on one surface of the first base steel 12, only the surface layer may be removed, and the first plating layer 14 arranged on the other surface of the first base steel 12 may not be removed, or only the surface layer among the surface layer and the diffusion layer of the first plating layer 14 may be removed, or both the surface layer and the diffusion layer of the first plating layer 14 may be removed. However, the opposite case is also possible.

In an embodiment, when at least part of the second plating layer 24 of the second plated steel plate 20 is removed, at least part of the second plating layer 24 in a thickness direction of the second plated steel plate 20 may be removed. For example, among a surface layer and a diffusion layer of the second plating layer 24 of a portion to be welded in the second plated steel plate 20, only the surface layer may be removed. In this case, among the surface layer and the diffusion layer of the second plating layer 24 arranged on one surface of the second base steel 22, only the surface layer may be removed, and the second plating layer 24 arranged on the other surface of the second base steel 22 may not be removed, or only the surface layer among the surface layer and the diffusion layer of the second plating layer 24 may be removed, or both the surface layer and the diffusion layer of the second plating layer 24 may be removed. However, the opposite case is also possible.

Also, when the surface layer of the first plating layer 14 and the second plating layer 24 is removed, at least part of the diffusion layer may also be removed.

In an embodiment, when a plating amount is less than 50 g/m² based on one flat surface of the first base steel 12, the first plating layer 14 arranged on the first base steel 12 may not be removed. Specifically, when the plating amount on each of one surface and the other surface of the first base steel 12 is less than 50 g/m², the first plating layer 14 arranged on each of one surface and the other surface of the first base steel 12 may not be removed.

In an embodiment, when the plating amount is less than 50 g/m² based on one surface of the second base steel 22, the second plating layer 24 arranged on the second base steel 22 may not be removed. Specifically, also, when the plating amount on each of one surface and the other surface of the second base steel 22 is less than 50 g/m², the second plating layer 24 arranged on each of the one surface and the other surface of the second base steel 22 may not be removed.

In an embodiment, when a laser beam is emitted from a laser head to a boundary between the first plated steel plate 10 and the second plated steel plate 20, the joint 30 connecting the first plated steel plate 10 to the second plated steel plate 20 may be formed at the boundary between the first plated steel plate 10 and the second plated steel plate 20.

The joint 30 may be formed by melting the first plated steel plate 10 and the second plated steel plate 20 by a laser beam, and through this process, a component of the first plating layer 14 of the first plated steel plate 10 and a component of the second plating layer 24 of the second plated steel plate 20 may be dissolved into the joint 30. However, prior to performing laser welding on the first plated steel plate 10 and the second plated steel plate 20, at least part of the first plating layer 14 and/or the second plating layer 24 of portions to be welded in the first plated steel plate 10 and the second plated steel plate 20 may be removed in advance, and accordingly, aluminum (Al) content included in the joint 30 may have a low value.

In an embodiment, a filler wire may be used in the process of laser-welding the first plated steel plate 10 and the second plated steel plate 20. In this case, the filler wire may be used for the purpose of component compensation for gap bridging and strengthening hardenability of the joint 30.

First, when an edge of the first plated steel plate 10 is arranged to face an edge of the second plated steel plate 20, a gap may occur at a boundary surface of the first plated steel plate 10 and the second plated steel plate 20. In this case, when the filler wire is used, the gap occurring at the boundary surface of the first plated steel plate 10 and the second plated steel plate 20 may be filled.

In an embodiment, a filler wire may be provided at the boundary surface of the first plated steel plate 10 and the second plated steel plate 20 in a bonding step of forming the joint 30 connecting the first plated steel plate 10 to the second plated steel plate 20 by emitting a laser beam. That is, after the step of arranging edges of the first plated steel plate 10 and the second plated steel plate 20 to face each other, a joining step of providing a filler wire at the boundary between the first plated steel plate 10 and the second plated steel plate 20 and emitting a laser beam to form the joint 30 connecting the first plated steel plate 10 to the second plated steel plate 20 may be performed. However, the filler wire may not be provided at the boundary between the first plated steel plate 10 and the second plated steel plate 20.

In an embodiment, a filler wire may be provided at the boundary between the first plated steel plate 10 and the second plated steel plate 20, and a laser beam may be emitted from a laser head to form the joint 30 connecting the first plated steel plate 10 to the second plated steel plate 20 at the boundary between the first plated steel plate 10 and the second plated steel plate 20.

The joint 30 may be formed by melting the first plated steel plate 10, the second plated steel plate 20, and a filler wire by using a laser beam, and through this process, a component of the first plating layer 14 of the first plated steel plate 10 and a component of the second plating layer 24 of the second plated steel plate 20 may be dissolved into the joint 30. Therefore, the composition of a filler wire has to be determined by considering the component dissolution of the first plating layer 14 and the second plating layer 24 during laser welding.

In an embodiment, a filler wire may include an austenite stabilizing element. For example, the filler wire may include at least one austenite stabilizing element among carbon (C) and manganese (Mn), iron (Fe), and inevitable impurities in a remainder amount. In this case, the content of carbon (C) in the filler wire may be 0.01 wt% or more and 1.5 wt% or less, the content of silicon (Si) may be 0.1 wt% or more and 2.0 wt% or less, and the content of manganese (Mn) may be 0.01 wt% or more and 20.0 wt% or less. The filler wires may be dissolved into the joint 30 and may adjust the composition of the joint 30.

In an embodiment, the filler wire may include carbon (C) in an amount of 0.01 wt% or more and 1.5 wt% or less, silicon (Si) in an amount of 0.1 wt% or more and 2.0 wt% or less, manganese (Mn) in an amount of 0.01 wt% or more and 20.0 wt% or less, and phosphorus (P) in an amount more than 0 and of 0.1 wt% or less, sulfur (S) in an amount more than 0 and of 0.1 wt% or less, iron (Fe), and other unavoidable impurities in a remainder amount.

The filler wire may include carbon (C) in an amount of 0.01 wt% or more and 1.5 wt% or less. When carbon (C) content included in the filler wire is less than 0.01 wt%, the joint 30 may be softened, and hardness of the joint 30 may be less than hardnesses of the first plated steel plate 10 and the second plated steel plate 20, and accordingly, fracture may occur in the joint 30. In contrast to this, when the carbon (C) content included in the filler wire is more than 1.5 wt%, brittle fracture may occur in the joint 30.

The filler wire may include silicon (Si) in an amount of 0.1 wt% or more and 2.0 wt% or less. When the silicon (Si) content included in the filler wire is less than 0.1 wt%, brittle fracture may occur in the joint 30. In contrast to this, when the silicon (Si) content included in the filler wire is more than 2.0 wt%, slag may occur on the surface of a bead.

The filler wire may include manganese (Mn) in an amount of 0.01 wt% or more and 20.0 wt% or less. When the manganese (Mn) content included in the filler wire is less than 0.01 wt%, the joint 30 may be softened, hardness of the joint 30 may be less than hardnesses of the first plated steel plate 10 and the second plated steel plate 20, and accordingly, fracture may occur in the joint 30. In contrast to this, when the manganese (Mn) content included in the filler wire is more than 20.0 wt%, brittle fracture may occur in the joint 30.

The filler wire may include phosphorus (P) in an amount more than 0 and of 0.1 wt% or less. When the phosphorus (P) content included in the filler wire is more than 0.1 wt%, brittle fracture due to segregation may occur.

The filler wire may include sulfur (S) in an amount of 0 or more and 0.1 wt% or less. When the sulfur (S) content included in the filler wire is more than 0.1 wt%, cracks due to formation of inclusions may occur.

Specifically, even when aluminum (Al) of the first plating layer 14 and the second plating layer 24 is mixed into a molten pool of the joint 30, a microstructure of the joint 30 may have 90% or more of a martensite structure in area fraction after hot stamping, preferably a full martensite structure, due to an austenite stabilizing element added to the filler wire. That is, according to the present disclosure, even when components of the first plating layer 14 and the second plating layer 24 are mixed into the joint 30 without removing the first plating layer 14 and the second plating layer 24, hardness and strength of the joint 30 may be prevented from being reduced, and accordingly, fracture may be prevented from occurring in the joint 30.

Also, when the first plated steel plate 10 has a different composition from the second plated steel plate 20, even when aluminum (Al) of the first plating layer 14 and the second plating layer 24 is mixed into a molten pool of the joint 30, a microstructure of the joint 30 after hot stamping may be prevented from excessively including ferrite due to the austenite stabilizing element added to the filler wire, and accordingly, fracture may be prevented from occurring in the joint 30.

In an embodiment, a radius of the filler wire may be less than or equal to a radius of a laser beam described below. Specifically, the radius of the filler wire may be less than or equal to 0.9 times the radius of the laser beam. That is, when the radius of the laser beam is BR, the radius of the filler wire may be less than or equal to BR * 0.9.

In an embodiment, an injection speed of the filler wire may be 0.6 to 1.3 times the formation speed of the joint 30 described below. When the injection speed of the filler wire is less than 0.6 times the formation speed of the joint 30, a gap bridging effect may be weakened, and it may be difficult to achieve the purpose of strengthening the hardenability of the joint 30. In contrast to this, when the injection speed of the filler wire is more than 1.3 times the formation speed of the joint 30, a thickness of the joint 30 may be thickened. Therefore, when the injection speed of the filler wire satisfies 0.6 to 1.3 times the formation speed of the joint 30, ae gap occurring at a boundary surface between the first plated steel plate 10 and the second plated steel plate 20 may be filled, the hardenability of the joint 30 may be strengthened, and a thickness of the joint 30 may be prevented from being thickened.

In an embodiment, an angle between the filler wire and the laser beam may be 30 degrees or more. Preferably, the angle between the filler wire and the laser beam may be 45 degrees or more. Specifically, an injection angle of the filler wire with respect to a direction in which the laser beam is emitted may be 30 degrees or more. Preferably, the injection angle of the filler wire with respect to the direction in which the laser beam is emitted may be 45 degrees or more.

In contrast to this, depending on bonding conditions, a component of the first plating layer 14, a component of the second plating layer 24, and a component of the filler wire may not be evenly distributed in components of the first base steel 12 and the second base steel 22 at the joint. To prevent this, a wavelength of the emitted laser beam may be adjusted when the first plated steel plate 10 is bonded to the second plated steel plate 20.

In an embodiment, the wavelength of the laser beam may be greater than or equal to 0.1 *µ*m and less than or equal to 10 *µ*m. When the wavelength of the laser beam is less than 0.1 *µ*m, the wavelength of the laser beam is too short, and accordingly, power of the laser beam has to be increased to melt the joint 30, which may result in a decrease in productivity and business feasibility. When the wavelength of the laser beam is greater than 10 *µ*m, laser absorption rates of the plated steel plates 10 and 20 decrease, and accordingly, it may be difficult to uniformly distribute, in a welding portion (or the joint 30), aluminum (Al) mixed from the plating layers 14 and 24 into the welding portion (or the joint 30). That is, aluminum (Al) segregation may occur in the welding portion (or the joint 30). Therefore, when the wavelength of the laser beam satisfies a wavelength greater than or equal to 0.1 *µ*m and less than or equal to 10 *µ*m, a laser is well absorbed by the plated steel plates 10 and 20 to sufficiently melt portions to be welded in the plated steel plates 10 and 20, and accordingly, aluminum (Al) may be uniformly distributed in the welding portion (or the joint 30). That is, aluminum (Al) segregation may be prevented from occurring in the welding portion (or the joint 30).

In an embodiment, power of the laser beam may be from 0.5 kW to 20 kW. In an embodiment, the power of the laser beam may mean an output value of a laser oscillation unit.

In an embodiment, when an aluminum-based plating blank 100 is manufactured, a formation speed of the joint 30 has to be greater than or equal to 1 m/min and power of a laser beam has to be less than or equal to 20 kW to increase productivity and business feasibility. The higher the power of the laser beam, the better, and in order to implement the power exceeding 20 kW, high-performance equipment is required, which increases a size of the equipment and increases the price of the equipment. Also, in order to increase productivity, it is necessary to maintain the formation speed of the joint 30 at 1 m/min or more. The formation speed of the joint 30 means a displacement per unit time in which a laser head moves relatively to and in parallel with a formation direction of the joint.

In an embodiment, the formation speed of the joint 30 may be 1 to 15 m/min. When the formation speed of the joint 30 exceeds 15 m/min, even when a laser beam having a wavelength of 0.1 to 10 *µ*m, a power of 0.5 to 20 kW, and a beam radius of 0.1 to 2.0 mm is emitted, the first plated steel plate 10 and the second plated steel plate 20 may not be sufficiently melted.

In an embodiment, a radius of the laser beam may be 0.1 to 2.0 mm. In order for the radius of the laser beam to exceed 2.0 mm, distances between the filler wire, the first and second plated steel plates 10 and 20, and the laser head have to be close, and in this case, a space where a filler wire is supplied or a space for replacing a filler wire when the filler wire is consumed may not be sufficient, and accordingly, manufacturing process efficiency may be reduced. In contrast to this, when the radius of the laser beam is less than 0.1 mm, a width of the joint 30 may be too small because the radius of the laser beam is small.

In an embodiment, when the laser beam is emitted, a first laser beam and a second laser beam which are separated from each other may be emitted. For example, the first laser beam melts the first plating layer 14, the second plating layer 24, the first base steel 12, and the second base steel 22, and the second laser beam maintains the molten state to achieve uniform stirring of the molten portion, and accordingly, the joint 30 may be prevented from being segregated, and the quality and mechanical properties may be excellent. Meanwhile, when the first laser beam and the second laser beam are used, the sum of powers of the first laser beam and the second laser beam may be 0.5 to 20 kW.

Meanwhile, when the aluminum-based plating blank 100 performs heat treatment by performing heating at a high temperature and then rapid cooling after bonding within the ranges of the wavelength of the laser beam, the power of the laser beam, the radius of the laser beam, and the formation speed of the joint 30, an average hardness of the joint 30 described above may be greater than or equal to an average hardness of the first plated steel plate 10 and the second plated steel plate 20, and preferably, greater than or equal to the least hardness of the first plated steel plate 10 and the second plated steel plate 20.

In other words, when the aluminum-based plating blank 100 performs heat treatment by performing heating at a high temperature and then rapid cooling after bonding within the ranges of the wavelength of the laser beam, the power of the laser beam, the radius of the laser beam, and the formation speed of the joint 30, the average hardness of the joint 30 described above may be greater than or equal to an average hardness of the first base steel 12 and the second base steel 22, and preferably, the least hardness of the joint 30 may be greater than or equal to an average hardness of the first base steel 12 and the second base steel 22.

Specifically, when the aluminum-based plating blank 100 is combined with steel plates of the same composition (for example, when the first plated steel plate 10 has the same composition as the second plated steel plate 20 by including a case where each of the first plated steel plate 10 and the second plated steel plate 20 includes a first alloy composition, each of the first plated steel plate 10 and the second plated steel plate 20 includes a second alloy composition, or each of the first plated steel plate 10 and the second plated steel plate 20 includes a third alloy composition), the least hardness of the joint 30 after hot stamping may be greater than or equal to the least hardness of the first plated steel plate 10 and the second plated steel plate 20 after hot stamping.

Meanwhile, when the aluminum-based plating blank 100 performs heat treatment by performing heating at a high temperature and then rapid cooling after bonding within the ranges of the wavelength of the laser beam, the power of the laser beam, the radius of the laser beam, and the formation speed of the joint 30, an average hardness of the joint 30 described above may be greater than at least one of an average hardness of the first plated steel plate 10 and an average hardness of the second plated steel plate 20, and preferably, the least hardness of the joint 30 may be greater than the least hardness of the first plated steel plate 10 and the second plated steel plate 20.

In other words, when the aluminum-based plating blank 100 performs heat treatment by performing heating at a high temperature and then rapid cooling after bonding within the ranges of the wavelength of the laser beam, the power of the laser beam, the radius of the laser beam, and the formation speed of the joint 30, the average hardness of the joint 30 described above may be greater than at least one of an average hardness of the first base steel 12 and an average hardness of the second base steel 22, and preferably, the least hardness of the joint 30 may be greater than the least hardness of the first base steel 12 and the second base steel 22.

Specifically, when the aluminum-based plating blank 100 is combined with steel plates having different compositions, the average hardness of the joint 30 after hot stamping may be greater than the least hardness of a steel plate with lower tensile strength among the first plated steel plate 10 and the second plated steel plate 20 after hot stamping.

In other words, when the aluminum-based plating blank 100 is combined with steel plates having different compositions, an average hardness of the joint 30 after hot stamping may be greater than the least hardness of a steel plate with lower tensile strength among the first base steel 12 and the second base steel 22 after hot stamping.

In an embodiment, a formation speed of the joint 30 may be 1 to 15 m/min, and in this case, power of a laser beam, a wavelength of the laser beam, and a radius of the laser beam may be respectively 0.5 to 20 kW, 0.1 to 10 *µ*m, and 0.1 to 2.0 mm

When the power of the laser beam, the wavelength of the laser beam, and the radius of the laser beam satisfy the conditions described above, the occurrence of aluminum (Al) segregation may be prevented, and accordingly, fracture of the joint may be prevented when tensioned. However, in this case, the formation speed of the joint 30 may be 1 to 15 m/min. When the formation speed of the joint 30 exceeds 15 m/min, there may not be enough time for energy to be evenly transferred to the joint 30. For example, under the formation speed condition of 15 to 30 m/min of the joint 30, even when power of a laser beam, a wavelength of the laser beam, and a radius of the laser beam satisfy the conditions described above, excessive segregation of aluminum (Al) may occur in the joint 30.

Hereinafter, configurations and operations of the present disclosure are described in more detail through preferred experimental examples of the present disclosure. However, this is presented as a preferred example of the present disclosure and may not be interpreted as limiting the present disclosure in any sense.

### Experimental Example 1

A slab obtained by reheating a steel slab including 0.22 wt% of carbon (C), 0.3 wt% of silicon (Si), 1.5 wt% of manganese (Mn), 0.02 wt% of phosphorus (P), 0.015 wt% of sulfur (S), 0.25 wt% of chromium (Cr), 0.0025 wt% of boron (B), 0.05 wt% of titanium (Ti), iron (Fe), and other unavoidable impurities in a remainder amount was finish-rolled, the hot-rolled steel plate was coiled, the coiled steel plate was cold-rolled, the cold-rolled steel plate was annealed, and the annealed steel plate was immersed in a plating bath including 8.5 wt% silicon (Si), aluminum (Al), and other unavoidable impurities in a remainder amount and cooled, and accordingly, a plating layer is formed on at least one surface of a base steel, and first and second plated steel plates having the same strength and different thicknesses of 1.2 mm and 1.6 mm were prepared.

Thereafter, a part of each of plating layers formed on both surfaces of a base steel formed at a welding portion in the first and second plated steel plates was removed by using a laser beam. For example, a part of each of the plating layers respectively arranged on one surface and the other surface of the base steel of the welding portion was removed by using a laser beam.

In addition, an edge of the first plated steel plate was arranged to face an edge of the second plated steel plate, and then a laser beam was emitted to melt the facing portions of the aluminum-based plated steel plates to form a joint, and accordingly, aluminum-based plating blanks of Example 1 to Example 3 and Comparative Example 1 to Comparative Example 4 were manufactured.

In Example 1 to Example 3 and Comparative Example 1 to Comparative Example 3, both sides of the base steel were formed with a plating adhesion amount of 70 g/m², and in Comparative Example 4, both sides of the base steel were formed with a plating adhesion amount of 100 g/m².

Also, when steel plates were bonded to each other, a laser beam having power of 4 kW and a radius of 1.0 mm was emitted, and the joint was formed at a formation speed of 5 m/min.

In this case, a laser beam having a wavelength of 5 *µ*m was emitted in Example 1, a laser beam having a wavelength of 2 *µ*m was emitted in Example 2, a laser beam having a wavelength of 10 *µ*m was emitted in Example 3, a laser beam having a wavelength of 11 *µ*m was emitted in Comparative Example 1 to Comparative Example 3, and a laser beam having a wavelength of 9 *µ*m was emitted in Comparative Example 4.

That is, powers of the laser beams, radiuses of the laser beams, and formation speeds of joints are respectively the same as each other in Example 1 to Example 3 and Comparative Example 1 to Comparative Example 4, but wavelengths of the laser beams may be different from each other.

Table 1 below shows fracture occurrence regions during a tensile test after hot stamping, according to an average aluminum content of a joint and a standard deviation of aluminum content.

**[Table 1]**

| Classific ation | Average aluminum content (wt%) of joint | Standard deviation of aluminum content of joint | Standard deviation of aluminum content in first side portion | Standard deviation of aluminum content in second side portion | Fracture occurrence region during tensile test after hot stamping |
|---|---|---|---|---|---|
| Example 1 | 0.10 | 0.04 | 0.05 | 0.03 | Plated steel plate |
| Example 2 | 0.40 | 0.09 | 0.08 | 0.08 | Plated steel plate |
| Example 3 | 0.49 | 0.45 | 0.40 | 0.39 | Plated steel plate |
| Compara tive Example 1 | 0.48 | 0.46 | 0.39 | 0.38 | Joint |
| Compara tive Example 2 | 0.49 | 0.42 | 0.38 | 0.41 | Joint |
| Compara tive Example 3 | 0.48 | 0.44 | 0.41 | 0.40 | Joint |
| Compara tive Example 4 | 0.55 | 0.47 | 0.39 | 0.42 | joint |

As described above, an average aluminum (Al) content of the joint 30 may be 0 wt% or more and less than 0.5 wt%. Also, the joint 30 may include the first side portion 31, the second side portion 33, and the center portion 35, and a standard deviation of the aluminum (Al) contents of the joint 30 may be 0 or more and 0.45 or less, and the standard deviation of the aluminum (Al) contents of the first side portion 31 and the second side portion 33 may be 0 or more and 0.4 or less.

Referring to Table 1, when an average aluminum (Al) content of the joint 30, a standard deviation of aluminum (Al) contents of the joint 30, a standard deviation of aluminum (Al) content of the first side portion 31, and a standard deviation of aluminum (Al) content of the second side portion 33 satisfy the conditions described above, it is possible to check that fracture occurs in a plated steel plate (for example, the first plated steel plate 10 and/or the second plated steel plate 20) during a tensile test after hot stamping of the aluminum-based plating blank 100.

Comparative Example 1 is a case where a standard deviation of aluminum content of the joint 30 exceeds 0.45, and even though an average aluminum content of the joint 30 is less than 0.50 wt% and a standard deviation of aluminum contents of the first side portion and the second side portion is 0.4 or less, it is possible to check that fracture occurs in the joint 30 during a tensile test after hot stamping of the aluminum-based plating blank 100. Comparative Example 1 is a case where a wavelength of a laser beam exceeds 10 *µ*m, and even though aluminum content of the joint satisfies a content less than 0.50 wt%, laser absorption rates of the plated steel plates 10 and 20 are reduced because the wavelength of the laser beam is too long, and accordingly, aluminum mixed into the joint 30 from the plating layers 14 and 24 was not uniformly distributed in the joint 30. For example, aluminum content of the joint 30 was less than 0.50 wt%, which satisfies the condition required for the aluminum content of the joint 30, but a wavelength of the laser beam was too long such that aluminum was not mixed well in the joint 30, and accordingly, aluminum was not uniformly distributed in the joint 30.

Comparative Example 2 is a case where a standard deviation of aluminum content of the second side portion exceeds 0.4, and even though an average aluminum content of the joint is less than 0.50 wt% and a standard deviation of aluminum contents of the joint is 0.45 or less and a standard deviation of aluminum content of the first side portion satisfies a content 0.4 or less, it is possible to check that fracture occurs in the joint 30 during a tensile test after hot stamping of the aluminum-based plating blank 100. Comparative Example 2 is a case where a wavelength of a laser beam exceeds 10 *µ*m, and aluminum content of the joint 30 satisfies a content less than 0.50 wt%, but the wavelength of the laser beam is too long such that laser absorption rates of the plated steel plates 10 and 20 are reduced, and accordingly, aluminum mixed into the joint 30 from the plating layers 14 and 24 is not uniformly distributed in the joint 30. For example, the aluminum content of the joint 30 is less than 0.50 wt%, and the aluminum content of the joint 30 satisfies the required condition, but the wavelength of the laser beam is too long such that aluminum is not mixed well in the joint 30, and accordingly, the aluminum was not uniformly distributed in the joint 30.

Comparative Example 3 is a case where a standard deviation of aluminum content of the first side portion exceeds 0.4, and even though an average aluminum content is less than 0.50 wt% and a standard deviation of aluminum contents of the joint is 0.45 or less and a standard deviation of aluminum content of the second side portion satisfies a content 0.4 or less, it is possible to check that fracture occurs in the joint 30 during a tensile test after hot stamping of the aluminum-based plating blank 100. Comparative Example 3 is a case where a wavelength of a laser beam exceeds 10 *µ*m, and aluminum content of the joint 30 satisfies a content less than 0.50 wt%, but the wavelength of the laser beam is too long such that laser absorption rates of the plated steel plates 10 and 20 are reduced, and accordingly, aluminum mixed into the joint 30 from the plating layers 14 and 24 is not uniformly distributed in the joint 30. For example, the aluminum content of the joint 30 is less than 0.50 wt%, and the aluminum content of the joint 30 satisfies the required condition, but the wavelength of the laser beam is too long such that aluminum is not mixed well in the joint 30, and accordingly, the aluminum was not uniformly distributed in the joint 30.

Comparative Example 4 is a case where an average aluminum content is 0.50 wt% or more and a standard deviation of the aluminum contents of the joint exceeds 0.45 and a standard deviation of aluminum content of the second side portion exceeds 0.4, and even though the standard deviation of the aluminum content of the first side portion satisfies a standard deviation 0.4 or less, it is possible to check that fracture occurs in the joint 30 during a tensile test after hot stamping of the aluminum-based plating blank 100. In Comparative Example 4, the wavelength of the laser beam is less than or equal to 10 *µ*m, which satisfies a welding condition, but the aluminum content of the joint 30 is too much such that aluminum of the joint 30 is not mixed well, and accordingly, the aluminum is not uniformly distributed in the joint 30.

Therefore, when an average aluminum (Al) content of the joint 30 is 0 wt% or more and less than 0.5 wt% and a standard deviation of the aluminum (Al) content of the joint 30 is 0 or more and 0.45 or less, occurrence of fracture in the joint 30 may be prevented or reduced during a tensile test after hot stamping of the aluminum-based plating blank 100. In particular, because a standard deviation of aluminum (Al) contents of a portion (for example, the first side portion 31) where the first plated steel plate 10 is adjacent to the joint 30 and a portion (for example, the second side portion 33) where the second plated steel plate 20 is adjacent to the joint 30 is 0 or more and 0.4 or less, aluminum (Al) is evenly distributed in the first side portion 31 and the second side portion 33, and accordingly, occurrence of fracture between the first plated steel plate 10 and the joint 30 and between the second plated steel plate 20 and the joint 30 may be prevented or reduced.

### Experimental Example 2

A slab obtained by reheating a steel slab including 0.06 wt% of carbon (C), 0.45 wt% of silicon (Si), 1.75 wt% of manganese (Mn), 0.015 wt% of phosphorus (P), 0.003 wt% of sulfur (S), 0.002 wt% of boron (B), 0.015 wt% of titanium (Ti), iron (Fe), and other unavoidable impurities in a remainder amount was finish-rolled, the hot-rolled steel plate was coiled, the coiled steel plate was cold-rolled, the cold-rolled steel plate was annealed, and the annealed steel plate was immersed in a plating bath including 8.5 wt% silicon (Si), aluminum (Al), and other unavoidable impurities in a remainder amount and cooled, and accordingly, a first plated steel plate including a first plating layer formed on at least one surface of a first base steel was prepared. In this case, a thickness of the first plated steel plate is 1.4 mm.

A slab obtained by reheating a steel slab including 0.29 wt% of carbon (C), 0.2 wt% of silicon (Si), 1.5 wt% of manganese (Mn), 0.02 wt% of phosphorus (P), 0.01 wt% of sulfur (S), 0.2 wt% of chromium (Cr), 0.0025 wt% of boron (B), 0.035 wt% of titanium (Ti), iron (Fe), and other unavoidable impurities in a remainder amount was finish-rolled, the hot-rolled steel plate was coiled, the coiled steel plate was cold-rolled, the cold-rolled steel plate was annealed, and the annealed steel plate was immersed in a plating bath including 8.5 wt% silicon (Si), aluminum (Al), and other unavoidable impurities in a remainder amount and cooled, and accordingly, a second plated steel plate including a second plating layer formed on at least one surface of a second base steel was prepared. In this case, a thickness of the second plated steel plate is 1.4mm.

Thereafter, a part of each of plating layers formed on both surfaces of a base steel formed at a welding portion in the first and second plated steel plates was removed by using a laser beam. For example, a part of each of the plating layers respectively arranged on one surface and the other surface of the base steel of the welding portion was removed by using a laser beam.

In addition, an edge of the first plated steel plate was arranged to face an edge of the second plated steel plate, and then a laser beam was emitted to melt the facing portions of the aluminum-based plated steel plates to form a joint, and accordingly, aluminum-based plating blanks of Example 4 to Example 6 and Comparative Example 5 to Comparative Example 8 were manufactured.

In Example 4 to Example 6 and Comparative Example 5 to Comparative Example 7, both sides of the base steel were formed with a plating adhesion amount of 70 g/m², and in Comparative Example 8, both sides of the base steel were formed with a plating adhesion amount of 100 g/m².

Also, when steel plates were bonded to each other, a laser beam having power of 4 kW and a radius of 1.0 mm was emitted, and the joint was formed at a formation speed of 5 m/min.

In this case, a laser beam having a wavelength of 5 *µ*m was emitted in Example 4, a laser beam having a wavelength of 2 *µ*m was emitted in Example 5, a laser beam having a wavelength of 10 *µ*m was emitted in Example 6, a laser beam having a wavelength of 11 *µ*m was emitted in Comparative Example 5 to Comparative Example 7, and a laser beam having a wavelength of 9 *µ*m was emitted in Comparative Example 8.

That is, powers of the laser beams, radiuses of the laser beams, and formation speeds of joints are respectively the same as each other in Example 4 to Example 6 and Comparative Example 5 to Comparative Example 8, but wavelengths of the laser beams may be different from each other.

Table 2 below shows fracture occurrence regions during a tensile test after hot stamping, according to an average aluminum content of a joint and a standard deviation of aluminum content.

**[Table 2]**

| Classific ation | Average aluminum content (wt%) of joint | Standard deviation of aluminu m content of joint | Standard deviation of aluminum content of first side portion | Standard deviation of aluminum content of second side portion | Fracture occurrence region during tensile test after hot stamping |
|---|---|---|---|---|---|
| Example 4 | 0.12 | 0.03 | 0.03 | 0.04 | Plated steel plate |
| Example 5 | 0.40 | 0.07 | 0.05 | 0.06 | Plated steel plate |
| Example 6 | 0.49 | 0.45 | 0.38 | 0.38 | Plated steel plate |
| Comparative Example 5 | 0.47 | 0.46 | 0.39 | 0.39 | Joint |
| Comparative Example 6 | 0.48 | 0.43 | 0.37 | 0.41 | Joint |
| Comparative Example 7 | 0.48 | 0.45 | 0.41 | 0.39 | Joint |
| Comparative Example 8 | 0.53 | 0.46 | 0.38 | 0.43 | Joint |

As described above, an average aluminum (Al) content of the joint may be 0 wt% or more and less than 0.5 wt%. Also, the joint may include the first side portion, the second side portion, and the center portion, and a standard deviation of the aluminum contents of the joint may be 0 or more and 0.45 or less, and the standard deviation of the aluminum contents of the first side portion and the second side portion may be greater than or equal to 0 and 0.4 or less.

Referring to Table 2, when an average aluminum content of the joint, a standard deviation of aluminum contents of the joint, a standard deviation of aluminum content of the first side portion, and a standard deviation of aluminum content of the second side portion satisfy the conditions described above, it is possible to check that fracture occurs in a plated steel plate (for example, the first plated steel plate and/or the second plated steel plate) during a tensile test after hot stamping of the aluminum-based plating blank.

Comparative Example 5 is a case where a standard deviation of aluminum content of the joint exceeds 0.45, and even though an average aluminum content of the joint is less than 0.50 wt% and a standard deviation of aluminum contents of the first side portion and the second side portion is 0.4 or less, it is possible to check that fracture occurs in the joint during a tensile test after hot stamping of the aluminum-based plating blank. Comparative Example 5 is a case where a wavelength of a laser beam exceeds 10 *µ*m, and aluminum content of the joint satisfies a content less than 0.50 wt%, but the wavelength of the laser beam is too long such that a laser absorption rate of a plated steel plate is reduced, and accordingly, aluminum mixed into a joint from a plating layer is not uniformly distributed in the joint. For example, the aluminum content of the joint is less than 0.50 wt%, and the aluminum content of the joint satisfies the required condition, but the wavelength of the laser beam is too long such that aluminum is not mixed well in the joint, and accordingly, the aluminum was not uniformly distributed in the joint.

Comparative Example 6 is a case where a standard deviation of aluminum content of the second side portion exceeds 0.4, and even though an average aluminum content of the joint is less than 0.50 wt% and a standard deviation of aluminum contents of the joint is 0.45 or less and a standard deviation of aluminum content of the first side portion satisfies a content 0.4 or less, it is possible to check that fracture occurs in the joint during a tensile test after hot stamping of the aluminum-based plating blank. Comparative Example 6 is a case where a wavelength of a laser beam exceeds 10 *µ*m, and aluminum content of the joint satisfies a content less than 0.50 wt%, but the wavelength of the laser beam is too long such that a laser absorption rate of a plated steel plate is reduced, and accordingly, aluminum mixed into a joint from a plating layer is not uniformly distributed in the joint. For example, the aluminum content of the joint is less than 0.50 wt%, and the aluminum content of the joint satisfies the required condition, but the wavelength of the laser beam is too long such that aluminum is not mixed well in the joint, and accordingly, the aluminum was not uniformly distributed in the joint.

Comparative Example 7 is a case where a standard deviation of aluminum content of the first side portion exceeds 0.4, and even though an average aluminum content is less than 0.50 wt% and a standard deviation of aluminum contents of the joint is 0.45 or less and a standard deviation of aluminum content of the second side portion satisfies a content 0.4 or less, it is possible to check that fracture occurs in the joint during a tensile test after hot stamping of the aluminum-based plating blank. Comparative Example 7 is a case where a wavelength of a laser beam exceeds 10 *µ*m, and aluminum content of the joint satisfies a content less than 0.50 wt%, but the wavelength of the laser beam is too long such that a laser absorption rate of a plated steel plate is reduced, and accordingly, aluminum mixed into a joint from a plating layer is not uniformly distributed in the joint. For example, the aluminum content of the joint is less than 0.50 wt%, and the aluminum content of the joint satisfies the required condition, but the wavelength of the laser beam is too long such that aluminum is not mixed well in the joint, and accordingly, the aluminum was not uniformly distributed in the joint.

Comparative Example 8 is a case where an average aluminum content is 0.50 wt% or more and a standard deviation of the aluminum contents of the joint exceeds 0.45 and a standard deviation of aluminum content of the second side portion exceeds 0.4, and even though the standard deviation of the aluminum content of the first side portion satisfies a standard deviation 0.4 or less, it is possible to check that fracture occurs in the joint during a tensile test after hot stamping of the aluminum-based plating blank. In Comparative Example 8, the wavelength of the laser beam is less than or equal to 10 *µ*m, which satisfies a welding condition, but the aluminum content of the joint is too much such that aluminum of the joint is not mixed well, and accordingly, the aluminum is not uniformly distributed in the joint.

Therefore, when an average aluminum content of the joint is 0 wt% or more and less than 0.5 wt% and a standard deviation of the aluminum content of the joint is 0 or more and 0.45 or less, occurrence of fracture in the joint may be prevented or reduced during a tensile test after hot stamping of the aluminum-based plating blank. In particular, because a standard deviation of aluminum contents of a portion (for example, the first side portion) where the first plated steel plate is adjacent to the joint and a portion (for example, the second side portion) where the second plated steel plate is adjacent to the joint is 0 or more and 0.4 or less, aluminum is evenly distributed in the first side portion and the second side portion, and accordingly, occurrence of fracture between the first plated steel plate and the joint and between the second plated steel plate and the joint may be prevented or reduced.

### Experimental Example 3

Example 7 to Example 9 and Comparative Example 9 to Comparative Example 11 respectively used aluminum-based plating blanks manufactured under the same conditions as Example 4 to Example 6 and Comparative Example 5 to Comparative Example 7 of Experimental Example 2. In this case, a laser beam having a wavelength of 2 *µ*m was emitted in Example 7, a laser beam having a wavelength of 5 *µ*m was emitted in Example 8, a laser beam having a wavelength of 10 *µ*m was emitted in Example 9, and a laser beam having a wavelength of 11 *µ*m was emitted in Comparative Example 9 to Comparative Example 11.

Table 3 below shows fracture occurrence regions during a tensile test after hot stamping, according to an average silicon content of a joint and/or a standard deviation of silicon content.

**[Table 3]**

| Classificatio n | Average silico content (wt%) of joint | Standard deviation of silicone content of joint | Fracture occurrence region during tensile test after hot stamping |
|---|---|---|---|
| Example 7 | 0.3 | 0.06 | Plated steel plate |
| Example 8 | 0.5 | 0.13 | Plated steel plate |
| Example 9 | 0.8 | 0.20 | Plated steel plate |
| Comparativ e Example 9 | 0.7 | 0.21 | Joint |
| Comparativ e Example 10 | 0.8 | 0.22 | Joint |
| Comparativ e Example 11 | 0.8 | 0.21 | Joint |

As described above, an average silicon content of the joint may be 0.3 wt% or more and 0.8 wt% or less. Also, a standard deviation of silicon content of the joint may be 0 or more and 0.2 or less.

Referring to Table 3, when the average silicon content of the joint and the standard deviation of the silicon content of the joint satisfy the conditions described above, it is possible to check that fracture occurs in a plated steel plate (for example, the first plated steel plate and/or the second plated steel plate) during a tensile test after hot stamping of the aluminum-based plating blank.

Referring to Comparative Example 9 to Comparative Example 11, even when the average silicon content of the joint satisfies a content 0.3 wt% or more and 0.8 wt% or less, when a wavelength of a laser beam exceeds 10 *µ*m, the silicon content of the joint satisfies a content less than or equal to 0.80 wt%, but the wavelength of the laser beam is too long such that a laser absorption rate of the plated steel plate is reduced, and accordingly, silicon mixed into the joint from the plating layer is not uniformly distributed in the joint. For example, the silicon content of the joint is 0.50 wt% or less, and the silicon content of the joint satisfies the required condition, but the wavelength of the laser beam is too long such that silicon is not mixed well in the joint, and accordingly, the silicon was not uniformly distributed in the joint.

Although the present disclosure is described with reference to embodiments illustrated in the drawings, this is merely an example, and those skilled in the art will understand that various modifications and variations of the embodiments are possible therefrom. Therefore, the true technical protection scope of the present disclosure should be determined by the technical idea of the appended patent claims.

## Claims

1. An aluminum-based plating blank comprising:
a first plated steel plate;
a second plated steel plate connected to the first plated steel plate; and
a joint located between the first plated steel plate and the second plated steel plate and connecting the first plated steel plate to the second plated steel plate,
wherein each of the first plated steel plate and the second plated steel plate includes a base steel and a plating layer formed with an adhesion amount of 20 to 100 g/m² on at least one surface of the base steel and including aluminum (Al), and
the joint includes aluminum (Al), and an average aluminum (Al) content of the joint is 0 wt% or more and less than 0.5 wt%.

2. The aluminum-based plating blank of claim 1, wherein a standard deviation of aluminum (Al) content of the joint is 0 or more and 0.45 or less.

3. The aluminum-based plating blank of claim 1, wherein the joint includes a first side portion adjacent to the first plated steel plate, a second side portion adjacent to the second plated steel plate, and a center portion between the first side portion and the second side portion.

4. The aluminum-based plating blank of claim 3, wherein a standard deviation of aluminum (Al) content of the first side portion is 0 or more and 0.4 or less.

5. The aluminum-based plating blank of claim 1, wherein the base steel includes carbon (C) in an amount of 0.01 wt% or more and 0.5 wt% or less, silicon (Si) in an amount of 0.01 wt% or more and 1.0 wt% or less, manganese (Mn) in an amount of 0.3 wt% or more and 2.0 wt% or less, phosphorus (P) in an amount more than 0 and of 0.1 wt% or less, sulfur (S) in an amount of 0 or more and 0.1 wt% or less, iron (Fe) and other unavoidable impurities in a remainder amount.

6. The aluminum-based plating blank of claim 1, wherein the first plated steel plate has a same strength as the second plated steel plate.

7. The aluminum-based plating blank of claim 1, wherein the first plated steel plate has a different thickness from the second plated steel plate.
